# EUROPEAN PATENT APPLICATION

(11) **EP 1 918 307 A2**
(43) Date of publication of application: **07.05.2008**
(21) Application number: 07021185.9
(22) Date of filing: 30.10.2007
(51) Int. Cl.: C08C 19/22, C08F 8/30

(54) **Thermoplastic elastomer and thermoplastic elastomer composition**

(30) Priority: 30.10.2006 JP 2006294227; 30.10.2006 JP 2006294626; 07.09.2007 JP 2007232981
(71) Applicant: The Yokohama Rubber Co., Ltd., Minato-ku Tokyo 105-8685 (JP)
(72) Inventor: Chino, Keisuke, Hiratsuka City Kanagawa 254-8601 (JP); Sakai, Tomoyuki, Hiratsuka City Kanagawa 254-8601 (JP)
(74) Representative: HOFFMANN EITLE

(57) **Abstract**

A thermoplastic elastomer exhibiting high recyclability and oil resistance as well as excellent mechanical strength, and in particular, excellent resistance to compression set is provided. The thermoplastic elastomer is comprising an elastomeric polymer having epoxide, hydroxy group, and a nitrogen-containing heterocycle, wherein the nitrogen-containing heterocycle is bonded to backbone of the elastomeric polymer through nitrogen atom or oxygen atom.

## Description

The entire contents of documents cited in this specification are incorporated herein by reference.

### BACKGROUND OF THE INVENTION

This invention relates to a thermoplastic elastomer and a thermoplastic elastomer composition, and more specifically, to a thermoplastic elastomer which has a characteristic nature that it can be repetitively and reproducibly undergo crosslinking and de-crosslinking by temperature change (hereinafter sometimes referred to as "recyclability"), and a thermoplastic elastomer composition containing such thermoplastic elastomer.

Recycling of once used materials has become an urgent agenda for environmental protection, resources saving, and other considerations. Crosslinked rubbers (vulcanized rubbers) have a stable three-dimensional network structure formed by covalent bonding of a macromolecular substance and a crosslinking agent (vulcanizing agent), and accordingly exhibit very high strength. Re-molding of such material, however, is difficult due to the crosslinking by the strong covalent bonding. On the other hand, thermoplastic elastomers utilize physical crosslinking, and molding of such material is readily accomplished by heat melting the material without the necessity of complicated vulcanization and molding steps such as premolding.

A typical such thermoplastic elastomer is an elastomeric elastomer containing a resin component and a rubber component. In the case of this thermoplastic elastomer, the resin component which is microcrystalline at room temperature constitutes the hard segment acting as the crosslinking moiety for the three-dimensional network structure to thereby prevent plastic deformation of the rubber component (soft segment). At an elevated temperature, the softening or melting of this resin component realizes plastic deformation of the elastomer. Such thermoplastic elastomer containing the resin component, however, often suffers from the loss of rubber elasticity, and therefore, a material which can be imparted with thermoplasticity and which is also free from such resin component is highly demanded.

Under such situation, the inventors of the present invention found that a thermoplastic elastomer which is crosslinkable by hydrogen bond and which includes an elastomeric polymer having a carbonyl-containing group and a heterocyclic amine-containing group in its side chain can repetitively undergo crosslinking and de-crosslinking by changing temperature through the use of the hydrogen bond. Based on this finding, the inventors of the present invention proposed a thermoplastic elastomer which can undergo hydrogen bonding and which includes an elastomeric polymer having (i) a carbonyl-containing group and (ii) a heterocyclic amine-containing group in its side chain. The inventors also proposed a method for producing such thermoplastic elastomer which includes reacting an elastomeric polymer having a cyclic acid anhydride group in its side chain and a heterocyclic amine-containing compound at a temperature which allows chemical bonding of the heterocyclic amine-containing compound with the cyclic acid anhydride group to thereby produce the thermoplastic elastomer (see JP 2000-169527 A).

The thermoplastic elastomer having such properties has enormous industrial and environmental value, and such material is also expected as a material having even higher tensile strength and excellent recyclability without change in its physical properties even after repetitive crosslinking and de-crosslinking.

### SUMMARY OF THE INVENTION

However, the thermoplastic elastomer described in JP 2000-169527 A sometimes suffered from insufficient oil resistance despite its favorable recyclability, and this thermoplastic elastomer was often inadequate for use in applications where oil resistance is required.

In view of the situation as described above, an object of the present invention is to provide a thermoplastic elastomer exhibiting high recyclability and oil resistance as well as excellent mechanical strength, and in particular, excellent resistance to compression set.

Another object of the present invention is to provide a thermoplastic elastomer composition containing such thermoplastic elastomer.

The inventors of the present invention have made an intensive study to solve the problems as described above, and found that the thermoplastic elastomer which can be produced by a predetermined reaction has high recyclability and oil resistance as well as excellent mechanical strength, and in particular, excellent resistance to compression set. The present invention is based on such a finding.

Accordingly, a first aspect of the present invention provides the thermoplastic elastomer as described in the following (i) to (vii), and a second aspect of the present invention provides the thermoplastic elastomer composition as described in the following (viii).
(i) A thermoplastic elastomer comprising an elastomeric polymer having epoxide, hydroxy group, and a nitrogen-containing heterocycle, wherein the nitrogen-containing heterocycle is bonded to backbone of the elastomeric polymer through nitrogen atom or oxygen atom.
(ii) The thermoplastic elastomer according to (i) above which has a structure represented by the following formula (1) or (1'):

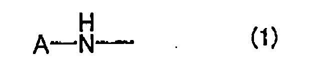

   A-O- (1')

   wherein A represents a nitrogen-containing heterocycle.
(iii) The thermoplastic elastomer according to (i) or (ii) above which has a structure represented by any one of the following formulae (2a) to (2c) and (2a') to (2c') : 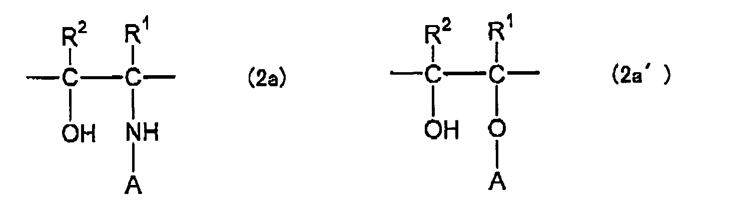 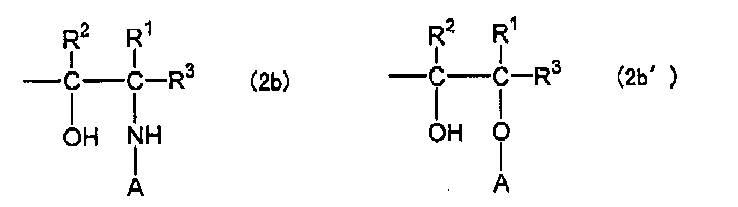 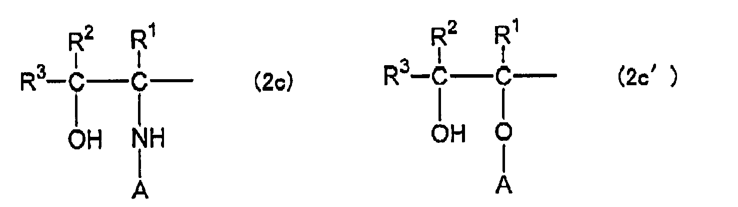 wherein A represents a nitrogen-containing heterocycle, and R¹ to R³ independently represent hydrogen atom, an alkyl group, an aryl group, or an aralkyl group wherein an alkyl group is substituted with an aryl group.

The nitrogen-containing heterocycle is preferably a five-membered ring or a six-membered ring.

The nitrogen-containing heterocycle is preferably a triazole ring, a thiazole ring, an imidazole ring, a pyridine ring, a thiadiazole ring, or a hydantoin ring.
(iv) The thermoplastic elastomer according to any one of (i) to (iii) above which is produced by reacting a compound (A) having epoxide and a compound (B) having amino group or hydroxy group and a nitrogen-containing heterocycle.
(v) The thermoplastic elastomer according to (iv) above wherein the compound (A) is an epoxidized elastomer.
(vi) The thermoplastic elastomer according to (v) above wherein the epoxidized elastomer is epoxidized natural rubber, styrene elastomer having epoxide, acrylic rubber having epoxide, ethylene - glycidyl methacrylate - methyl acrylate copolymer, or ethylene - glycidyl methacrylate - vinyl acetate copolymer.
(vii) The thermoplastic elastomer according to any one of (iv) to (vi) above wherein the compound (B) is 3-amino-1,2,4-triazole, 2-aminothiazole, 4-aminopyridine, or 2-butyl-4-hydroxymethylimidazole.
(viii) A thermoplastic elastomer composition comprising the thermoplastic elastomer of any one of (i) to (vii) above.
   On the other hand, the inventors of the present invention have made an intensive study to solve the problems as described above, and found that the thermoplastic elastomer which can be produced by a predetermined reaction has high recyclability and oil resistance as well as excellent mechanical strength, and in particular, excellent resistance to compression set. The present invention is based on such a finding.
   Accordingly, a third aspect of the present invention provides the thermoplastic elastomer as described in the following (ix) to (xv), and a fourth aspect of the present invention provides the thermoplastic elastomer composition as described in the following (xvi) to (xvii).
(ix) A thermoplastic elastomer comprising an elastomeric polymer having epoxide and hydroxy group, which is produced by reacting a compound (C) having epoxide and a polyamine compound (D) having at least two primary amino groups (-NH₂) and branching carbon and/or branching nitrogen.
(x) The thermoplastic elastomer according to (ix) above wherein the compound (C) is an epoxidized elastomer.
(xi) The thermoplastic elastomer according to (x) above wherein the epoxidized elastomer is epoxidized natural rubber, styrene elastomer having epoxide, acrylic rubber having epoxide, ethylene - glycidyl methacrylate - methyl acrylate copolymer, or ethylene - glycidyl methacrylate - vinyl acetate copolymer.
(xii) The thermoplastic elastomer according to any one of (ix) to (xi) above wherein the polyamine compound (D) has a tertiary amino group, that is, a group represented by the following formula: 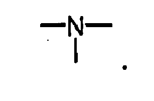
(xiii) The thermoplastic elastomer according to any one of (ix) to (xii) above wherein the polyamine compound (D) has a secondary amino group (-NH-).
(xiv) The thermoplastic elastomer according to (xiii) above wherein the polyamine compound (D) is a polyalkyleneimine.
(xv) The thermoplastic elastomer according to any one of (ix) to (xiv) above which has a structure represented by any one of the following formulae (3a) to (3c): 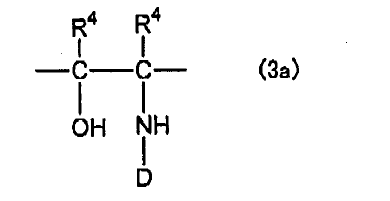 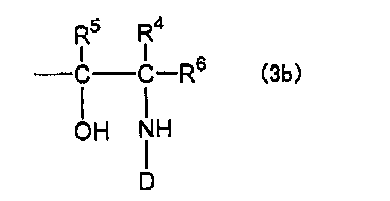 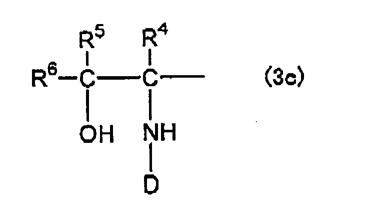 wherein D represents a hydrocarbon group having at least one primary amino group and branching carbon and/or branching nitrogen, R⁴ to R⁶ independently represent hydrogen atom, an alkyl group, an aryl group, or an aralkyl group wherein an alkyl group is substituted with an aryl group.
(xvi) A thermoplastic elastomer composition comprising the thermoplastic elastomer of any one of (ix) to (xv) above.
(xvii) The thermoplastic elastomer composition according to (xvi) above, further comprising a polyamide compound.

As will be described below, the present invention should be useful since it provides a thermoplastic elastomer exhibiting excellent recyclability and oil resistance simultaneously with excellent mechanical strength, and in particular, excellent resistance to compression set. The composition containing such thermoplastic elastomer is also very useful since the composition has similar valuable merits.

### DETAILED DESCRIPTION OF THE INVENTION

Next, the present invention is described in detail.

The thermoplastic elastomer according to the first aspect of the present invention is a thermoplastic elastomer comprising an elastomeric polymer having epoxide, hydroxy group, and a nitrogen-containing heterocycle, wherein the nitrogen-containing heterocycle is bonded to the backbone of the elastomeric polymer through nitrogen atom or oxygen atom.

In the meanwhile, the thermoplastic elastomer according to the third aspect of the present invention is a thermoplastic elastomer comprising an elastomeric polymer having epoxide and hydroxy group, which is produced by reacting a compound (C) having epoxide and a polyamine compound (D) having at least two primary amino groups and branching carbon and/or branching nitrogen.

In the first and third aspects of the present invention, "epoxide" is an oxide in the form of a three-membered ring, and two carbon atoms constituting the three-membered ring may either constitute a part of the backbone of the elastomeric polymer, or exist by bonding to the backbone of the elastomeric polymer through a chemically stable bond (such as covalent bond or ionic bond).

In the first and third aspects of the present invention, the "hydroxy group" does not include the hydroxy group constituting a part of a carboxy group.

The reason why the thermoplastic elastomer according to the first aspect of the present invention exhibits excellent recyclability and oil resistance simultaneously with excellent mechanical strength, and in particular, excellent resistance to compression set is not precisely known. The inventors of the present invention, however, believe that the reason is as described below.

The thermoplastic elastomer has an extremely large number of moieties which are crosslinkable by hydrogen bond in its structure. In other words, the thermoplastic elastomer has hydroxy group and a nitrogen-containing heterocycle, and the nitrogen-containing heterocycle is bonded to the backbone through nitrogen atom or oxygen atom. This should have resulted in the high recyclability and the excellent mechanical strength, and in particular, excellent resistance to compression set.

Similarly, the excellent oil resistance should have resulted from the presence of epoxide in the structure of the thermoplastic elastomer.

Also, the reason why the thermoplastic elastomer according to the third aspect of the present invention exhibits excellent recyclability and oil resistance simultaneously with excellent mechanical strength, and in particular, excellent resistance to compression set is not precisely known. The inventors of the present invention, however, believe that the reason is as described below.

The thermoplastic elastomer has an extremely large number of moieties which are crosslinkable by hydrogen bond in its structure. In other words, the thermoplastic elastomer according to the third aspect of the present invention is produced by the reaction of the compound (C) having epoxide and the polyamine compound (D) having at least two primary amino groups and branching carbon and/or branching nitrogen, and as a result, it has at least hydroxy group and a secondary amino group (the reactive moiety). This should have resulted in the high recyclability and the excellent mechanical strength, and in particular, excellent resistance to compression set.

Similarly, the excellent oil resistance should have resulted from the presence of epoxide in the structure of the thermoplastic elastomer.

The elastomeric polymer which forms the backbone of the thermoplastic elastomers according to the first and third aspects of the present invention (hereinafter sometimes together referred to as "the thermoplastic elastomer of the present invention") is not particularly limited as long as it is a polymer which is a publicly known natural or synthetic polymer having a glass transition point (Tg) of up to room temperature (25°C), namely, an elastomer.

Exemplary such elastomeric polymers include diene rubbers such as natural rubber (NR), isoprene rubber (IR), butadiene rubber (BR), 1,2-butadiene rubber, styrene-butadiene rubber (SBR), acrylonitrile-butadiene rubber (NBR), chloroprene rubber (CR), butyl rubber (IIR), and ethylene-propylene-diene rubber (EPDM), and their hydrogenated products; olefin rubbers such as ethylene-propylene rubber, ethylene-acrylic rubber (AEM), ethylene-butene rubber (EBM), chlorosulfonated polyethylene, acrylic rubber, fluororubber, polyethylene rubber, and polypropylene rubber; epichlorohydrin rubbers; polysulfide rubbers; silicone rubbers; and urethane rubbers.

The elastomeric polymer as mentioned above may be an elastomeric polymer containing a resin component. Exemplary such elastomeric polymers include optionally hydrogenated polystyrene elastomeric polymers (for example, SBS, SIS, and SEBS), polyolefin elastomeric polymers, polyvinyl chloride elastomeric polymers, polyurethane elastomeric polymers, polyester elastomeric polymers, and polyamide elastomeric polymers.

The elastomeric polymer as mentioned above may be liquid or solid and may have a non-limited molecular weight, and these factors may be adequately selected depending on the application of the thermoplastic elastomer of the present invention and the thermoplastic elastomer compositions according to the second and fourth aspects of the present invention (hereinafter sometimes together referred to as "the composition of the present invention") and the physical property required therefor.

When the fluidity of the thermoplastic elastomer of the present invention and the composition of the present invention (hereinafter sometimes simply referred to as "the thermoplastic elastomer (composition) of the present invention") after heating (de-crosslinking) is important, the elastomeric polymer is preferably liquid, and in the case of diene rubber such as isoprene rubber or butadiene rubber, the weight average molecular weight is preferably in the range of 1,000 to 100,000, and more preferably in the range of approximately 1,000 to 50,000.

On the other hand, when the strength of the thermoplastic elastomer (composition) of the present invention is important, the elastomeric polymer is preferably solid, and in the case of diene rubber such as isoprene rubber or butadiene rubber, the weight average molecular weight is preferably at least 100,000, and more preferably in the range of approximately 500,000 to 1,500,000.

In the present invention, the weight average molecular weight is a weight average molecular weight (calculated in terms of polystyrene) measured by gel permeation chromatography (GPC). The solvent used in the measurement is preferably tetrahydrofuran (THF).

In the present invention, the elastomeric polymers used may be a mixture of two or more of the elastomeric polymers as mentioned above. In such a case, the mixing ratio of the elastomeric polymers may be adequately selected depending on the application of the thermoplastic elastomer (composition) of the present invention, physical properties required for the thermoplastic elastomer (composition) of the present invention, and the like.

The glass transition point of the elastomeric polymer is preferably up to 25°C as described above, and when the elastomeric polymer has two or more glass transition points or when a mixture of two or more elastomeric polymers is used, at least one of the glass transition points is preferably up to 25°C. This is preferable since the article molded from the thermoplastic elastomer (composition) of the present invention will exhibit rubber elasticity at room temperature when the glass transition point of the elastomeric polymer is within such range.

In the present invention, the glass transition point is the one measured by differential scanning calorimetry (DSC). The temperature elevation speed is preferably 10°C/min.

Such elastomeric polymer is preferably a diene rubber such as natural rubber (NR), isoprene rubber (IR), butadiene rubber (BR), 1,2-butadiene rubber, styrene-butadiene rubber (SBR), ethylene-propylene-diene rubber (EPDM), or butyl rubber (IIR); or an olefin rubber such as ethylene-propylene rubber (EPM), ethylene-acrylic rubber (AEM), or ethylene-butene rubber (EBM), since such rubber has a glass transition point of up to 25°C and the article molded from the thermoplastic elastomer (composition) of the present invention exhibits rubber elasticity at room temperature. When an olefin rubber is employed, deterioration of the composition will be suppressed due to the absence of the double bond.

In the present invention, the amount of styrene bonded in the case of the styrene-butadiene rubber (SBR), or degree of hydrogenation in the case of the hydrogenated elastomeric polymer is not particularly limited, and such parameters may be adequately adjusted depending on the application of the thermoplastic elastomer (composition) of the present invention, physical properties required for the thermoplastic elastomer (composition) of the present invention, and the like.

When the backbone of the elastomeric polymer is ethylene-propylene-diene rubber (EPDM), ethylene-acrylic rubber (AEM), ethylene-propylene rubber (EPM), or ethylene-butene rubber (EBM), the ethylene content is preferably 10 to 90% by mole, and more preferably 40 to 90% by mole. When the ethylene content is within such range, the resulting thermoplastic elastomer (composition) of the present invention will exhibit excellent mechanical strength, and in particular, excellent resistance to compression set.

The thermoplastic elastomer according to the first aspect of the present invention is a thermoplastic elastomer comprising the elastomeric polymer as described above having epoxide, hydroxy group, and a nitrogen-containing heterocycle, wherein the nitrogen-containing heterocycle is bonded to the backbone of the elastomeric polymer through nitrogen atom or oxygen atom.

In the first aspect of the present invention, the nitrogen-containing heterocycle in the elastomeric polymer is preferably bonded to the backbone of the elastomeric polymer through nitrogen atom.

More specifically, the thermoplastic elastomer according to the first aspect of the present invention preferably has a structure represented by the following formula (1) or (1'), and more preferably, a structure represented by any one of the following formulae (2a) to (2c) and (2a') to (2c'):

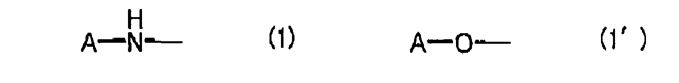

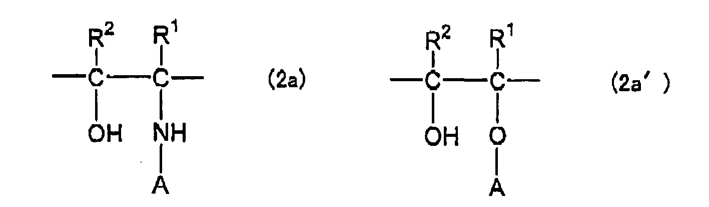

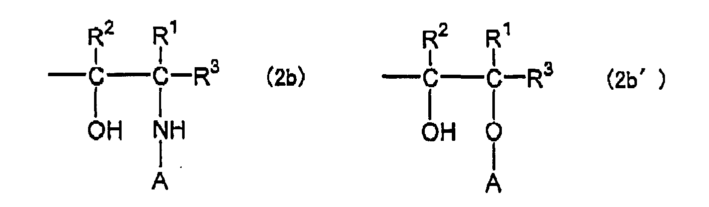

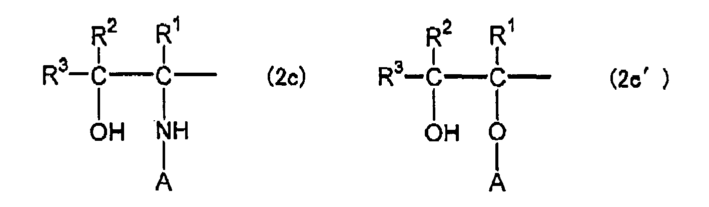

In the formulae (1) and (1'), A represents a nitrogen-containing heterocycle, and the bond of the nitrogen atom on the side which is not bonded to A does not represent methyl group but a bond (such as covalent bond or ionic bond) with the elastomeric polymer.

In the formulae (2a) to (2c) and (2a') to (2c'), A represents a nitrogen-containing heterocycle, and R¹ to R³ independently represent hydrogen atom, an alkyl group, an aryl group, or an aralkyl group wherein an alkyl group is substituted with an aryl group.

The unoccupied bond of each carbon atom in the formulae (2a) and (2a') does not represent methyl group, but the bond between two carbon atoms in the formulae (2a) and (2a') constitutes a part of the backbone of the elastomeric polymer. The unoccupied bond of the carbon atom having R² bonded thereto in the formulae (2b) and (2b') and the unoccupied bond of the carbon atom having R¹ bonded thereto in the formulae (2c) and (2c') does not represent methyl group, but the bond (such as covalent bond or ionic bond) with the elastomeric polymer.

As described above, A in the formulae (1) and (1') represents a nitrogen-containing heterocycle. Examples for the A are as described below.

As described above, R¹ to R³ in the formulae (2a) to (2c) and (2a') to (2c') independently represent hydrogen atom, an alkyl group, an aryl group, or an aralkyl group wherein an alkyl group is substituted with an aryl group. Preferable examples for the R¹ to R³ include an alkyl group containing 1 to 30 carbon atoms, an aralkyl group containing 7 to 20 carbon atoms, and an aryl group containing 6 to 20 carbon atoms as in the case of the substituent X in the formulae (4) and (5) as will be described below.

In the first aspect of the present invention, the nitrogen-containing heterocycle may be the one containing in the heterocycle a hetero atom other than nitrogen atom such as sulfur atom, oxygen atom, or phosphorus atom as long as it contains nitrogen atom in the heterocycle.

The nitrogen-containing heterocycle may also be substituted, and exemplary substituents include alkyl groups such as methyl group, ethyl group, (iso)propyl group, and hexyl group; alkoxy groups such as methoxy group, ethoxy group, and (iso)propoxy group; groups comprising a halogen atom such as fluorine atom, chlorine atom, bromine atom, or iodine atom; cyano group; amino group; aromatic hydrocarbon group; ester group; ether group; acyl group; and thioether group, and these groups may also be used in combination. The position of substitution by such substituent is not particularly limited, and the number of substituents is also not limited.

Exemplary such nitrogen-containing heterocycles include pyrrololine, pyrrolidone, oxindole(2-oxindole), indoxyl(3-oxindole), dioxindole, isatin, indolyl, phthalimidine, β-isoindigo, monoporphyrin, diporphyrin, triporphyrin, azaporphyrin, phthalocyanine, hemoglobin, uroporphyrin, chlorophyll, phylloerythrin, imidazole, pyrazole, triazole, tetrazole, benzimidazole, benzopyrazole, benzotriazole, imidazoline, imidazolone, imidazolidone, hydantoin, pyrazoline, pyrazolone, pyrazolidone, indazole, pyridoindole, purine, cinnoline, pyrrole, pyrroline, indole, indoline, oxylindole, carbazole, phenothiazine, indolenine, isoindole, oxazole, thiazole, isoxazole, isothiazole, oxadiazole, thiadiazole, oxatriazole, thiatriazole, phenanthroline, oxazine, benzoxazine, phthalazine, pteridine, pyrazine, phenazine, tetrazine, berizoxazole, benzisoxazole, anthranyl, benzothiazole, benzofurazan, pyridine, quinoline, isoquinoline, acridine, phenanthridine, anthrazoline, naphthyridine, thiazine, pyridazine, pyrimidine, quinazoline, quinoxaline, triazine, histidine, triazolidine, melamine, adenine, guanine, thymine, cytosine, and derivatives thereof. Among these, the particularly preferred of the nitrogen-containing five-membered rings are the following compounds, the triazole derivative represented by the following formula (4), and the imidazole derivative represented by the following formula (5). These groups may be optionally substituted with various substituents as described above, and they may also be hydrogenated or dehydrogenated.

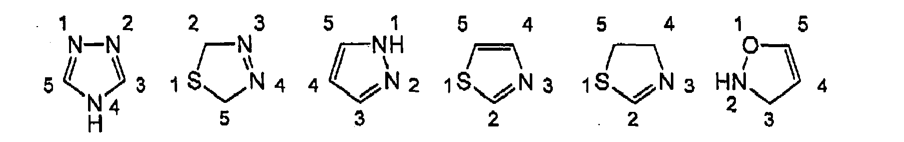

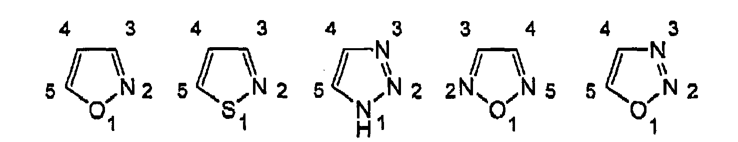

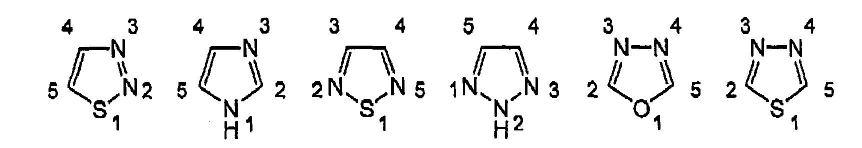

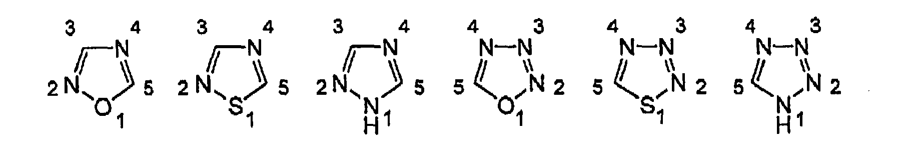

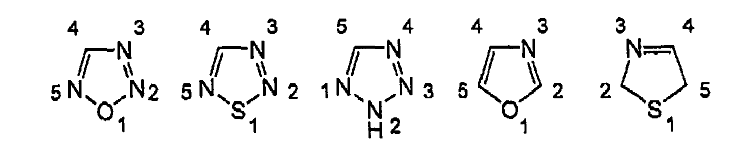

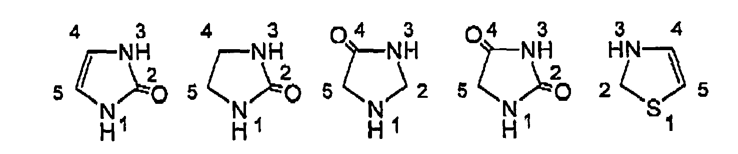

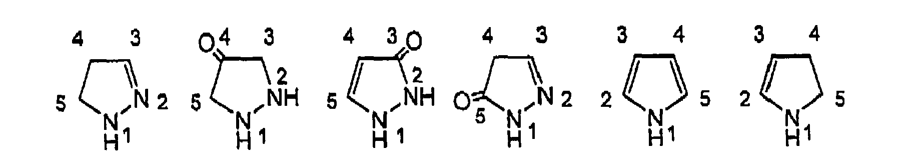

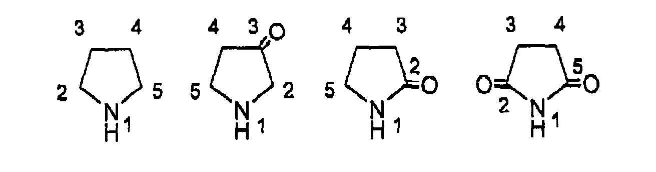

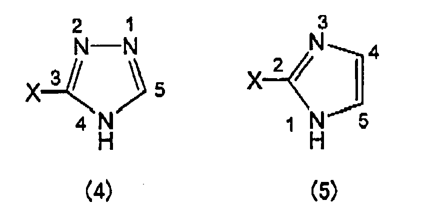

In the formulae, substituent X is an alkyl group containing 1 to 30 carbon atoms, an aralkyl group containing 7 to 20 carbon atoms, or an aryl group containing 6 to 20 carbon atoms.

More specifically, the substituent X may be a straight chain alkyl group such as methyl group, ethyl group, propyl group, butyl group, pentyl group, octyl group, dodecyl group, or stearyl group; or a branched alkyl group such as isopropyl group, isobutyl group, s-butyl group, t-butyl group, isopentyl group, neopentyl group, t-pentyl group, 1-methylbutyl group, 1-methylheptyl group, or 2-ethylhexyl group; an aralkyl group such as benzyl group or phenethyl group; or an aryl group such as phenyl group, tolyl group (o-, m-, or p-), dimethylphenyl group, or mesityl group.

Among these, the preferred are alkyl groups, and in particular, butyl group, octyl group, dodecyl group, isopropyl group, and 2-ethylhexyl group in view of the favorable flowability at high temperature of the resulting thermoplastic elastomer according to the first aspect of the present invention and the resulting thermoplastic elastomer composition according to the second aspect of the present invention.

With regard to the nitrogen-containing six-membered ring, the preferred are the compounds as shown below. These compounds may also have the substituents as described above, and they may also be hydrogenated or dehydrogenated.

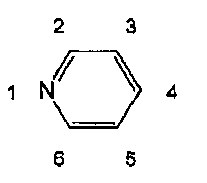

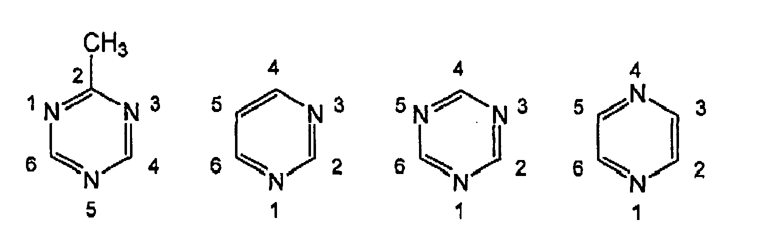

A condensation product of a nitrogen-containing heterocycle described above with benzene ring or a condensation product of nitrogen-containing heterocycles may also be employed. Exemplary condensed rings are shown below. These condensed rings may also have the substituents as described above, and they may also be hydrogenated or dehydrogenated.

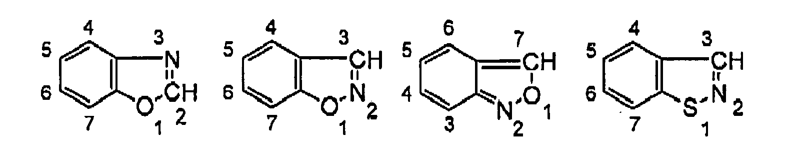

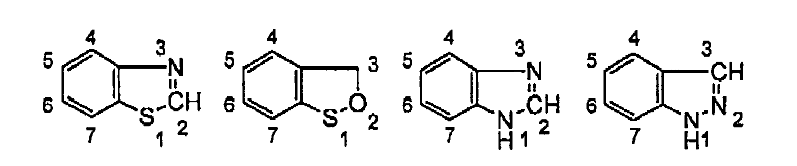

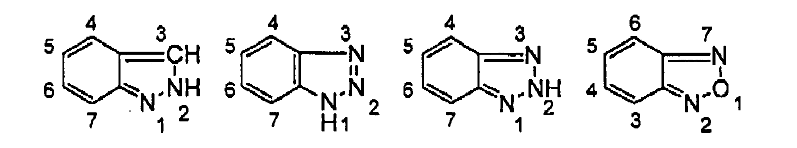

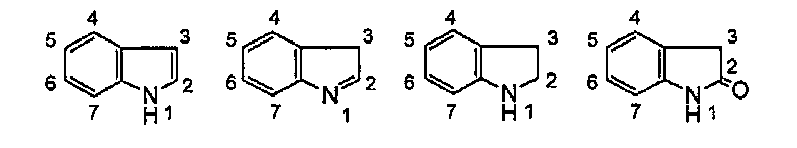

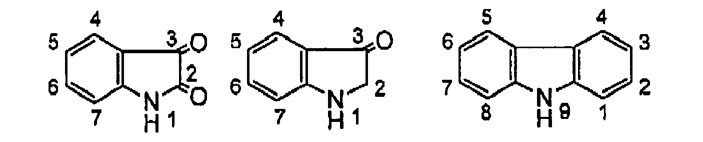

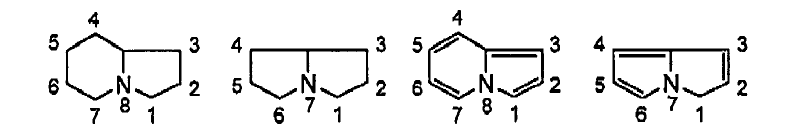

Among such nitrogen-containing heterocycles, the preferred are five-membered or six-membered heterocycles such as triazole ring, thiazole ring, imidazole ring, pyridine ring, thiadiazole ring, and hydantoin ring since the resulting thermoplastic elastomer according to the first aspect of the present invention and the thermoplastic elastomer composition according to the second aspect of the present invention will exhibit more excellent recyclability as well as more excellent mechanical strength, and in particular, more excellent resistance to compression set.

Among such nitrogen-containing heterocycles, also preferred are aromatic heterocycles since the resulting thermoplastic elastomer according to the first aspect of the present invention and the thermoplastic elastomer composition according to the second aspect of the present invention will exhibit further improved tensile strength when crosslinked and higher mechanical strength, and in particular, higher resistance to compression set.

In the first aspect of the present invention, such nitrogen-containing heterocycle is bonded to the backbone of the elastomeric polymer through nitrogen atom or oxygen atom, and therefore, the resulting thermoplastic elastomer according to the first aspect of the present invention has a large number of moieties which are crosslinkable by hydrogen bond. This should have resulted in the high recyclability as well as excellent mechanical strength, and in particular, excellent resistance to compression set.

Next, the binding position of the nitrogen-containing heterocycle is described. For convenience of description, the nitrogen-containing heterocycle used in the description is referred to as the "nitrogen-containing n-membered ring compound (n≥3)".

The binding positions in the following description ("position 1 to position n") are based on the IUPAC nomenclature. For example, in the case of the compound having three nitrogen atoms having unshared electron pair, the binding position is determined by the order defined in the IUPAC nomenclature. More specifically, the binding positions are indicated on the nitrogen-containing heterocycles of the five-membered ring, the six-membered ring, and the condensed ring.

In the thermoplastic elastomer according to the first aspect of the present invention, the binding position of the nitrogen-containing n-membered ring compound which binds to the backbone of the elastomeric polymer either through nitrogen atom or oxygen atom is not particularly limited, and the binding position may be any position (position 1 to position n). The binding position, however, is preferably position 1 or any of positions 3 to n.

When one nitrogen atom is contained in the nitrogen-containing n-membered ring compound (for example, as in the case of pyridine ring), the binding position is preferably any of position 3 to position (n-1) for ease of intramolecular chelate formation and the superior physical properties including the tensile strength of the thermoplastic elastomer composition according to the second aspect of the present invention.

Adequate selection of the binding position of the nitrogen-containing n-membered ring compound facilitates, in the thermoplastic elastomer according to the first aspect of the present invention, smooth formation of crosslinking by hydrogen bond, ionic bond, coordinate bond, and the like between the thermoplastic elastomers, resulting in superior recyclability, more excellent mechanical strength, and in particular, more excellent resistance to compression set.

In the thermoplastic elastomer according to the first aspect of the present invention, the epoxide preferably accounts for 0.1 to 60% of the monomer units of the elastomeric polymer. When the epoxide content is within such range, the resulting thermoplastic elastomer according to the first aspect of the present invention and the thermoplastic elastomer composition according to the second aspect of the present invention will exhibit higher oil resistance.

Similarly, the hydroxy group preferably accounts for 0.1 to 60% of the monomer units of the elastomeric polymer. When the hydroxy group content is within such range, the resulting thermoplastic elastomer according to the first aspect of the present invention and the thermoplastic elastomer composition according to the second aspect of the present invention will exhibit more excellent recyclability and resistance to compression set.

Similarly, the nitrogen-containing heterocycle preferably accounts for 0.1 to 60% of the monomer units of the elastomeric polymer. When the nitrogen-containing heterocycle content is within such range, the resulting thermoplastic elastomer according to the first aspect of the present invention and the thermoplastic elastomer composition according to the second aspect of the present invention will exhibit improved recyclability and resistance to compression set.

Preferably, the thermoplastic elastomer according to the first aspect of the present invention is the one produced by reacting the compound (A) having epoxide with the compound (B) having amino group or hydroxy group and a nitrogen-containing heterocycle since the amino group (nitrogen atom) or the ether group (oxygen atom) bonding the nitrogen-containing heterocycle to the backbone are readily formed, and the thus formed amino group (nitrogen atom) or the ether group (oxygen atom) has a high capability of forming the hydrogen bond.

### [Compound (A) having epoxide]

The compound (A) having epoxide may be, for example, an epoxidized elastomer comprising the elastomeric polymer as described above having epoxide.

Exemplary preferable epoxidized elastomers include epoxidized natural rubbers, styrene elastomers having epoxide, acrylic rubbers having epoxide, ethylene - glycidyl methacrylate - methyl acrylate copolymers, and ethylene - glycidyl methacrylate - vinyl acetate copolymers.

Among these, the preferred are epoxidized natural rubbers and acrylic rubbers containing epoxide in view of the favorable resistance to compression set of the resulting thermoplastic elastomer according to the first aspect of the present invention and the thermoplastic elastomer composition according to the second aspect of the present invention.

In the first aspect of the present invention, the epoxidized natural rubber may be the one produced by epoxidizing the natural rubber or a commercially available product.

The method used for epoxidizing the natural rubber is not particularly limited, and exemplary methods include chlorohydrin method, direct oxidation method, hydrogen peroxide method, alkyl hydroperoxide method, and peracid method, and more specifically, the epoxidation may be accomplished by reacting the natural rubber with an organic peracid such as peracetic acid or performic acid.

Exemplary commercially available products include ENR-25 (degree of epoxidation, 25%), ENR-50 (degree of epoxidation, 50%), and ENR-60 (degree of epoxidation, 60%) manufactured by Malaysian Rubber Board (MRB).

In the first aspect of the present invention, the degree of epoxidation of the epoxidized natural rubber is preferably 5 to 80% by mole, and more preferably 5 to 60% by mole. When the degree of epoxidation is within such range, the resulting thermoplastic elastomer according to the first aspect of the present invention will exhibit higher oil resistance.

The acrylic rubber having epoxide may be the one produced by copolymerizing a monomer component for constituting the skeleton such as ethyl acrylate, butyl acrylate, and methoxyethyl acrylate with a monomer component for providing crosslinking moiety such as glycidyl acrylate and glycidyl methacrylate, or a commercially available product.

Exemplary commercially available products include Nipol AR 30 series, 40 series, and 50 series manufactured by ZEON Corporation, and among these, the preferred are AR 32, AR 53L, and AR 54 in view of low Tg and excellent low temperature resistance.

The styrene elastomer having epoxide may be a styrene thermoplastic elastomer in which the hard segment comprises a polystyrene and the unsaturated double bond moiety in the conjugated diene component of the soft segment has been epoxidized. In the first aspect of the present invention, a commercially available product such as EPOFRIEND (for example, CT301 and AT501) manufactured by Daicel Chemical Industries, Ltd. can be used.

The ethylene - glycidyl methacrylate - methyl acrylate copolymer may be a commercially available product such as Bondfast 7L or 7M manufactured by Sumitomo Chemical Co., Ltd., and the ethylene - glycidyl methacrylate - vinyl acetate copolymer may also be a commercially available product such as Bondfast 2B or 7B manufactured by Sumitomo Chemical Co., Ltd.

### [Compound (B) having amino group or hydroxy group and a nitrogen-containing heterocycle]

Examples of the compound (B) having amino group or hydroxy group and a nitrogen-containing heterocycle include compounds having amino group or hydroxy group on the nitrogen-containing heterocycle as described above.

Among these, the preferred are triazole ring compounds such as 3-amino-1,2,4-triazole, 3-amino-1,2,4-triazole-5-carboxylic acid, 4-amino-1,2,4-triazole, and 1,2,4-triazol-3-ol; imidazole ring compounds such as 2-aminoimidazole, 2-butyl-4-hydroxymethylimidazole, 1-(2-hydroxyethyl)-2-methylimidazole, and 4-hydroxymethyl-2-methylimidazole; thiazole ring compounds such as 2-aminothiazole; and pyridine ring compounds such as 2-aminopyridine, 3-aminopyridine, and 4-aminopyridine.

The reaction conditions of the compound (A) and the compound (B) are not particularly limited since the reaction should be conducted under the conditions adequately selected depending on the compound (A). When an epoxidized natural rubber is used for the compound (A), the compound (A) and the compound (B) are preferably reacted under the condition of at least 100°C.

The glass transition point of the thermoplastic elastomer according to the first aspect of the present invention is preferably up to 25°C, and when the thermoplastic elastomer has two or more glass transition points or when a mixture of two or more thermoplastic elastomers is used, at least one of the glass transition points is preferably up to 25°C. This is preferable since the article molded from the thermoplastic elastomer will exhibit rubber elasticity at room temperature.

The thermoplastic elastomer according to the third aspect of the present invention is a thermoplastic elastomer comprising the elastomeric polymer as described above having epoxide and hydroxy group, and this thermoplastic elastomer is produced by reacting the compound (C) having epoxide with the polyamine compound (D) having at least two primary amino groups and branching carbon and/or branching nitrogen.

Next, the compound (C) having epoxide and the polyamine compound (D) used in producing the thermoplastic elastomer according to the third aspect of the present invention are described.

### [Compound (C) having epoxide]

In the third aspect of the present invention, the compound (C) having epoxide is the same as the compound (A) having epoxide described for the first aspect of the present invention.

### [Polyamine compound (D)]

The polyamine compound (D) is not particularly limited as long as it is a polyamine compound having at least two primary amino groups and branching carbon and/or branching nitrogen. Exemplary such compounds include polyalkyleneimines such as polyethyleneimine and polypropyleneimine; alicyclic amines such as diaminocyclohexane, bis-(4-aminocyclohexyl)methane, and N-aminoethylpiperazine; and aromatic polyamines such as diaminotoluene, diaminoxylene, tetramethylxylylenediamine, m-phenylenediamine, diaminodiphenylmethane, and diaminodiphenylsulfone.

In the present invention, the "branching carbon" is the carbon atom which is the starting point of the branches of the backbone of the polyamine compound (D), and the "branching nitrogen" is the nitrogen atom which is the starting point of the branches of the backbone of the polyamine compound (D).

In the third aspect of the present invention, the polyamine compound (D) preferably has a tertiary amino group. When the polyamine compound (D), has a tertiary amino group, the thermoplastic elastomer according to the third aspect of the present invention produced by the reaction with the compound (C) having epoxide as described above will have an increased number of moieties crosslinkable by the hydrogen bond, and as a consequence, the thermoplastic elastomer will have more excellent mechanical strength, and in particular, more excellent resistance to compression set due to the intermolecular three-dimensional crosslinking.

The "tertiary amino group" is a group in which no bond of the nitrogen atom is occupied by hydrogen atom.

In the third aspect of the present invention, the polyamine compound (D) preferably has a secondary amino group, and more specifically, the polyamine compound (D) is preferably a polyalkyleneimine. When the polyamine compound (D) has a secondary amino group, it will be capable of forming hydrogen bond with a carboxylic acid, and the mechanical strength will be more improved.

The term "secondary amino group" used herein means imino group (-NH-).

Among such polyamine compounds, the preferred is a polyethyleneimine since it has at least two primary amino groups and branching carbon and/or branching nitrogen, and also, a secondary amino group and a tertiary amino group.

The "polyethyleneimine" as used herein means an amine compound having a weight average molecular weight of about 300 to 100,000 and containing the primary amino group, the secondary amino group, and the tertiary amino group at a ratio of about 1:2:1. Exemplary such polyethyleneimine is the one represented by the following general formula: 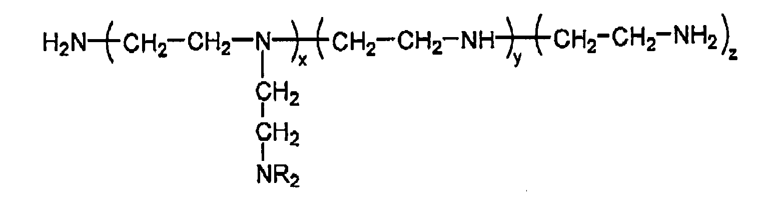 wherein x, y, and z independently represent an integer of 1 to 3000, and R represents hydrogen atom or a hydrocarbon group containing nitrogen atom. R is defined in this way since the recurring unit repeated x times, the recurring unit repeated y times, and the recurring unit repeated z times are included in the formula. The Rs may be the same or different. The arrangement of the recurring unit repeated x times, the recurring unit repeated y times, and the recurring unit repeated z times is not particularly limited, and these units may form random, block, or random/block arrangement.

In the third aspect of the present invention, a commercially available product may be used for the polyamine compound (D).

Exemplary commercially available products include polyethyleneimine (EPOMIN SP-018 manufactured by Nippon Shokubai Co., Ltd.; weight average molecular weight, 1,800) and polyethyleneimine (EPOMIN SP-200 manufactured by Nippon Shokubai Co., Ltd.; weight average molecular weight, 10,000).

The reaction conditions of the compound (C) having epoxide and the polyamine compound (D) are not particularly limited since the reaction should be conducted under the conditions adequately selected depending on the compound (C). When an epoxidized natural rubber is used for the compound (C), the compound (C) is preferably reacted with the compound (D) under the condition of at least 100°C.

The thermoplastic elastomer according to the third aspect of the present invention produced by reacting the compound (C) having epoxide with the polyamine compound (D) preferably has a structure represented by any one of the following formulae (3a) to (3c): 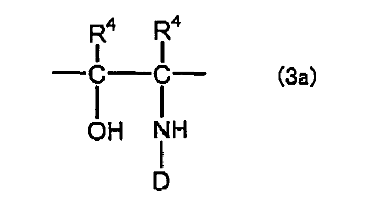 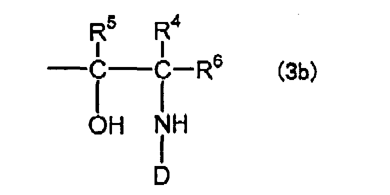 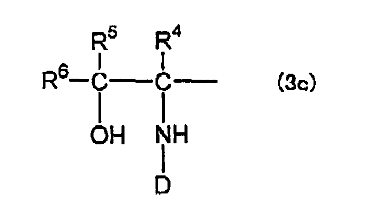 wherein D represents a hydrocarbon group having at least one primary amino group and branching carbon and/or branching nitrogen, R⁴ to R⁶ independently represent hydrogen atom, an alkyl group, an aryl group, or an aralkyl group wherein an alkyl group is substituted with an aryl group. The primary amino group of D may have undergone reaction with the epoxide of another compound (C) having epoxide, and in this case, the hydrocarbon group D includes the elastomeric polymer of another molecule.

The unoccupied bond of each carbon atom in the formula (3a) does not represent methyl group, but the bond between two carbon atoms in the formula (3a) constitutes a part of the backbone of the elastomeric polymer. The unoccupied bond of the carbon atom having R⁵ bonded thereto in the formula (3b) and the unoccupied bond of the carbon atom having R⁴ bonded thereto in the formula (3c) do not represent methyl group, but the bond (such as covalent bond or ionic bond) with the elastomeric polymer.

As described above, D in the formulae (3a) to (3c) independently represents a hydrocarbon group. Exemplary such hydrocarbon groups include the residue of the polyamine compound (D) from which one primary amino group has been removed, for example, the group as represented by the following general formula which is the residue of polyethyleneimine from which a primary amino group has been removed. 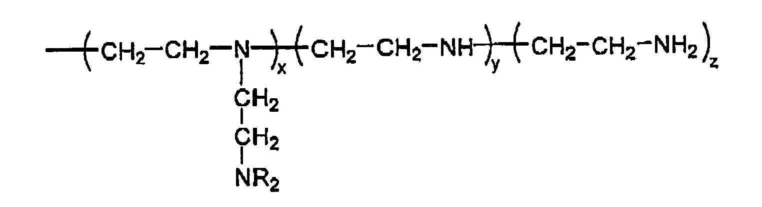 wherein x, y, and z independently represent an integer of 1 to 3000, and R represents hydrogen atom or a hydrocarbon group containing nitrogen atom. R is defined in this way since the recurring unit repeated x times, the recurring unit repeated y times, and the recurring unit repeated z times are included in the formula. The Rs may be the same or different. The arrangement of the recurring unit repeated x times, the recurring unit repeated y times, and the recurring unit repeated z times is not particularly limited, and these units may form random, block, or random/block arrangement.

As described above, R⁴ to R⁶ in the formulae (3a) to (3c) independently represent hydrogen atom, an alkyl group, an aryl group, or an aralkyl group wherein an alkyl group is substituted with an aryl group. Preferably, R⁴ to R⁶ represent an alkyl group containing 1 to 30 carbon atoms, an aralkyl group containing 7 to 20 carbon atoms, or an aryl group containing 6 to 20 carbon atoms.

Exemplary such substituents include straight chain alkyl groups such as methyl group, ethyl group, propyl group, butyl group, pentyl group, octyl group, dodecyl group, and stearyl group; branched alkyl groups such as isopropyl group, isobutyl group, s-butyl group, t-butyl group, isopentyl group, neopentyl group, t-pentyl group, 1-methylbutyl group, 1-methylheptyl group, and 2-ethylhexyl group; aralkyl groups such as benzyl group and phenethyl group; and aryl groups such as phenyl group, tolyl group (o-, m-, p-), dimethylphenyl group, and mesityl group.

Among these, the preferred are alkyl groups, and in particular, butyl group, octyl group, dodecyl group, isopropyl group, and 2-ethylhexyl group in view of flowability at an elevated temperature of the resulting thermoplastic elastomer according to third aspect of the present invention and the thermoplastic elastomer composition according to fourth aspect of the present invention.

In the thermoplastic elastomer according to the third aspect of the present invention, the epoxide preferably accounts for 0.1 to 60% of the monomer units of the elastomeric polymer. When the epoxide content is within such range, the resulting thermoplastic elastomer according to the third aspect of the present invention and the thermoplastic elastomer composition according to the fourth aspect of the present invention will exhibit higher oil resistance.

Similarly, in the thermoplastic elastomer according to the third aspect of the present invention, the hydroxy group preferably accounts for 0.1 to 60% of the monomer units of the elastomeric polymer. When the hydroxy group content is within such range, the resulting thermoplastic elastomer according to the third aspect of the present invention and the thermoplastic elastomer composition according to the fourth aspect of the present invention will exhibit more excellent recyclability and resistance to compression set.

As in the case of the thermoplastic elastomer according to the first aspect of the present invention, the thermoplastic elastomer according to the third aspect of the present invention preferably has a glass transition point of up to 25°C. When the thermoplastic elastomer has two or more glass transition points or when a mixture of two or more thermoplastic elastomers is used, at least one of the glass transition points is preferably up to 25°C. When the glass transition point is up to 25°C, the article molded from the thermoplastic elastomer will exhibit rubber elasticity at room temperature.

Next, the composition of the present invention containing the thermoplastic elastomer of the present invention is described.

The composition of the present invention contains at least one of the thermoplastic elastomers according to the first and the third aspect of the present invention. When two or more thermoplastic elastomers are incorporated, the mixing ratio of the thermoplastic elastomers may be adequately selected depending on the application of the composition, physical properties required for the composition, and the like.

The composition of the present invention may preferably contain a polyamide compound since the moldability is improved without detracting from the resistance to compression set.

The polyamide compound is not particularly limited as long as it is a polymer containing amide bond in the backbone, and preferable exemplary such polyamide compounds include polyamide elastomers containing nylon 6, nylon 66, nylon 11, nylon 12, or the like as the hard segment and a polyether or a polyester as the soft segment.

Exemplary such polyamide elastomers include commercially available products such as UBESTA XPA (manufactured by Ube Industries, Ltd.), VESTAMID (manufactured by Daicel-Huls Ltd.), PEBAX (manufactured by Toray Industries, Inc.), GRILAX (manufactured by Dainippon Ink and Chemicals, Incorporated), and NOVAMID ( manufactured by Mitsubishi Engineering-Plastics Corporation).

The polyamide compound may be incorporated at a content of up to 300 parts by weight in relation to 100 parts by weight of the thermoplastic elastomer of the present invention.

In the composition of the present invention, the polyamide compound is preferably incorporated when the compound (A) or (C) having epoxide is an acrylic rubber having epoxide since the resulting composition will exhibit synergistically improved compatibility and physical properties.

The composition of the present invention may also contain a polyester compound such as a polyether ester plasticizer or a polyester wax in order to reduce viscosity and hardness and improve moldability.

Exemplary polyether ester plasticizers include commercially available products such as RS-735 (manufactured by ADEKA CORPORATION), and exemplary polyester wax include commercially available products such as Gleck G-8205 (manufactured by Dainippon Ink and Chemicals, Incorporated).

The amount of the polyester compound incorporated in the composition is not particularly limited since the amount should vary depending on the type of the compound used. The polyester compound, however, is preferably incorporated in an amount of up to 50 parts by weight in the case of a polyether ester plasticizer, and in an amount of up to 30 parts by weight in the case of a polyester wax in relation to 100 parts by weight of the thermoplastic elastomer of the present invention in view of the elongation of the article molded from the composition of the present invention and texture of the product after the extrusion molding.

The composition of the present invention may preferably contain carbon black and/or silica as a reinforcing agent.

An adequate type of the carbon black may be selected depending on the application of the composition. Carbon black is generally divided into hard carbon and soft carbon based on the particle size. Soft carbon has a relatively weak reinforcement action on rubbers whereas hard carbon has a stronger reinforcement action on the rubbers. The composition of the present invention preferably includes a hard carbon having a stronger reinforcement action.

Such carbon black is preferably incorporated (when incorporated alone) at a content of 0.1 to 200 parts by weight, more preferably 1 to 100 parts by weight, and still more preferably 1 to 80 parts by weight in relation to 100 parts by weight of the thermoplastic elastomer of the present invention.

The silica incorporated is not particularly limited, and exemplary silicas include fumed silica, calcined silica, precipitated silica, pulverized silica, molten silica, and diatomaceous earth. Such silica is preferably incorporated (when incorporated alone) at a content of 0.1 to 200 parts by weight, more preferably 1 to 100 parts by weight, and still more preferably 1 to 80 parts by weight in relation to 100 parts by weight of the thermoplastic elastomer of the present invention. Among these, the preferred is precipitated silica.

When silica is used for the reinforcing agent, it may be used in combination with a silane coupling agent. Exemplary silane coupling agents include bis(triethoxysilylpropyl) tetrasulfide (Si69), bis(triethoxysilylpropyl) disulfide (Si75), γ-mercaptopropyltrimethoxysilane, and vinyltrimethoxysilane, and an aminosilane compound as described below may also be employed.

When the carbon black and the silica are incorporated in combination, they may be incorporated at a content (at a total content of the carbon black and the silica) of 0.1 to 200 parts by weight, more preferably 1 to 100 parts by weight, and still more preferably 1 to 80 parts by weight in relation to 100 parts by weight of the thermoplastic elastomer of the present invention.

If necessary, the composition of the present invention may contain a polymer other than the thermoplastic elastomer of the present invention, a reinforcing agent (filler) other than the carbon black and the silica, a filler having an amino group introduced therein (hereinafter simply referred to as "amino group-introduced filler"), an amino group-containing compound other than the amino group-introduced filler, a compound containing a metal element (hereinafter simply referred to as "metal salt"), maleic anhydride-modified polymer, an antiaging agent, an antioxidant, a pigment (dye), a plasticizer, a thixotropic agent, a UV absorbent, a flame retardant, a solvent, a surfactant (including leveling agent), an dispersant, a dehydrating agent, an anticorrosive, an adhesion promoter, an antistatic, a filler, and other additives as long as the object of the present invention is not hampered.

The additives may be those commonly used in the art, and some of the additives are as described below. The additives, however, are not limited to those described below.

The polymer other than the thermoplastic elastomer of the present invention is preferably a polymer having a glass transition point of up to 25°C for the same reason as described above. Exemplary such polymers include natural rubber (NR), isoprene rubber (IR), butadiene rubber (BR), 1,2-butadiene rubber, styrene-butadiene rubber (SBR), acrylonitrile-butadiene rubber (NBR), butyl rubber (IIR), ethylene-propylene-diene rubber (EPDM), ethylene-propylene rubber (EPM), ethylene-acrylic rubber (AEM), and ethylene-butene rubber (EBM), and the preferred are the polymers having no unsaturated bond such as IIR, EPM, and EBM or the polymer having few unsaturated bonds such as EPDM. Also preferred are polymers having the moiety capable of undergoing hydrogen bond, and examples of such polymers include polyester, polylactone, and polyamide. Also included are thermoplastic polymers such as polyolefin soft resin, propylene-butene copolymer, and ethylene-octen or ethylene-butene copolymer.

The composition of the present invention may contain either one polymer, or two or more polymers other than the thermoplastic elastomer of the present invention, and such polymer is preferably incorporated at a content of 0.1 to 200 parts by weight, and more preferably 1 to 100 parts by weight in relation to 100 parts by weight of the thermoplastic elastomer of the present invention.

Exemplary reinforcements other than the carbon black and the silica include iron oxide, zinc oxide, aluminum oxide, titanium oxide, barium oxide, magnesium oxide, calcium carbonate, magnesium carbonate, zinc carbonate, pyropyllite clay, kaolin clay, and calcined clay. Such reinforcing agent is preferably incorporated at a content of 0.1 to 200 parts by weight, and more preferably 1 to 100 parts by weight in relation to 100 parts by weight of the thermoplastic elastomer of the present invention.

The filler which serves as the base of the amino group-introduced filler (hereinafter sometimes simply referred to as "base filler") may be, for example, those mentioned as the fillers which may be optionally added to the crosslinked rubber. In view of ease of introducing the amino group and ease of adjusting the proportion of the amino group introduced (introduction rate), the preferred are silica, carbon black, and calcium carbonate, and the more preferred is silica.

The amino group introduced in the base filler (hereinafter sometimes simply referred to as "amino group") is not particularly limited, and exemplary amino groups include aliphatic amino groups, aromatic amino groups, heterocyclic amino groups, and mixtures of a plurality of such amino groups.

In the present invention, the amino group included in an aliphatic amine compound is referred to as the "aliphatic amino group", the amino group bonded to the aromatic group of an aromatic amine compound is referred to as the "aromatic amino group", and the amino group included in a heterocyclic amine compound is referred to as the "heterocyclic amino group".

Among these, the amino group is preferably a heterocyclic amino ,group, a mixed amino group containing a heterocyclic amino group, or an aliphatic amino group, and more preferably a heterocyclic amino group or an aliphatic amino group in view of the capability of undergoing an adequate interaction with the thermoplastic elastomer of the present invention and capability of effective dispersion in the thermoplastic elastomer.

The amino group is not particularly limited as to whether they are primary (-NH₂), secondary (imino group, >NH), tertiary (>N-), or quarternary (>N⁺<).

When the amino group is a primary amino group, the interaction with the thermoplastic elastomer of the present invention tends to be stronger, and gelation may take place depending on the conditions used in preparing the composition. On the other hand, when the amino group is a tertiary amino group, the interaction with the thermoplastic elastomer of the present invention tends to be weaker, and the effects of improving the resistance to compression set and the like of the resulting composition may be insufficient.

In view of such situation, the amino group is preferably either primary or secondary amino group, and more preferably secondary amino group.

In other words, the amino group is preferably a heterocyclic amino group, a mixed amino group containing a heterocyclic amino group, or a primary or secondary aliphatic amino group, and more preferably a heterocyclic amino group or a primary or secondary aliphatic amino group.

The base filler may have at least one amino group on its surface. However, the base filler may preferably have two or more amino groups on its surface in view of the superior effect of improving the resistance to compression set and other properties.

When the base filler has two or more amino groups, it is preferable for at least one of the two or more amino groups to be a heterocyclic amino group, and it is more preferable for the base filler to also have a primary or secondary amino group (aliphatic amino group, aromatic amino group, or heterocyclic amino group).

The type and the classification (primary, secondary, tertiary or quaternary) of the amino acid may be adequately selected depending on the physical properties required for the composition.

The amino group-introduced filler is produced by introducing the amino group in the base filler.

The method used for introducing the amino group is not particularly limited, and typical production methods include the surface treating methods (for example, the surface modifying method and the surface covering method) used in producing various fillers and reinforcements. Exemplary preferable methods include the method wherein a compound having a functional group capable of reacting with the base filler and the amino group is reacted with the base filler (surface modifying method); the method wherein the surface of the base filler is coated with a polymer having the amino group (surface covering method); and the method wherein a compound having the amino group is reacted with the filler in the step of the filler synthesis.

Such amino group-introduced fillers may be used either alone or in combination of two or more. When two or more amino group-introduced fillers are used in combination, their mixing ratio may be adequately selected depending on the application, the physical properties required, and the like of the composition of the present invention.

Such amino group-introduced filler is preferably used at a content of 0.1 to 200 parts by weight, more preferably 10 parts by weight or more, and most preferably 30 parts by weight or more per 100 parts by weight of the thermoplastic elastomer of the present invention.

Next, the amino group-containing compound other than the amino group-introduced filler is described.

The amino group in the amino group-containing compound may be basically the same as the one described for the amino group-introduced filler, and the number of amino groups is not particularly limited as long as the amino group-containing compound has at least one amino group. The amino group-containing compound, however, may preferably have two or more amino groups since the compound will then be capable of forming two or more crosslinking bonds with the thermoplastic elastomer of the present invention to more effectively improve the physical properties.

The classification (primary, secondary, tertiary or quaternary) of the amino group in the amino group-containing compound is not particularly limited, and as in the case of the amino group-introduced filler, the amino group may be either primary (-NH₂), secondary (imino group, >NH), tertiary (>N-), or quarternary (>N⁺<) depending on the physical properties such as recyclability, resistance to compression set, hardness, mechanical strength, and in particular, tensile strength required for the composition of the present invention. When a secondary amino group is selected, the amino group-containing compound is likely to have a superior mechanical strength, whereas the amino group-containing compound is likely to have a superior recyclability when a tertiary amino group is selected. Use of an amino group-containing compound having two secondary amino groups is particularly favorable since the resulting composition of the present invention will exhibit excellent and well-balanced recyclability, resistance to compression set, and mechanical strength.

When the amino group-containing compound has two or more amino groups, the number of primary amino groups in the compound is preferably up to two, and more preferably up to one. When the compound has three or more primary amino groups, the (crosslinking) bond formed by these amino groups and the functional group of the thermoplastic elastomer of the present invention (in particular carboxy group which is a carbonyl-containing group) may become excessively firm to detract from the excellent recyclability.

In other words, the classification (primary, secondary, tertiary or quaternary) and the number of amino acids, and the structure of the amino group-containing compound may be adequately adjusted and selected depending on the bond strength between the functional group of the thermoplastic elastomer of the present invention and the amino groups in the amino group-containing compound.

Exemplary preferable amino group-containing compounds include secondary aliphatic diamines such as N,N'-dimethylethylenediamine, N,N'-diethylethylenediamine, N,N'-diisopropylethylenediamine, N,N'-dimethyl-1,3-propanediamine, N,N'-diethyl-1,3-propanediamine, N,N'-diisopropyl-1,3-propanediamine, N,N'-dimethyl-1,6-hexanediamine, N,N'-diethyl-1,6-hexanediamine, and N,N' ,N"-trimethylbis(hexamethylene)triamine; tertiary aliphatic diamines such as tetramethyl-1,6-hexanediamine; polyamines containing an aromatic primary amine and a heterocyclic amine such as aminotriazole and aminopyridine; straight chain alkylmonoamines such as dodecylamine; and tertiary heterocyclic diamines such as dipyridyl since they are highly effective in improving the resistance to compression set, mechanical strength, and in particular, tensile strength.

Among these, the preferred are secondary aliphatic diamines, polyamines containing aromatic primary amine and heterocyclic amine, and tertiary heterocyclic diamines.

In addition to those mentioned above, the amino group-containing compound may also be a polymer compound having an amino group.

The polymer compound having the amino group is not particularly limited, and exemplary such compounds include polyamide, polyurethane, urea resin, melamine resin, polyvinylamine, polyallylamine, polyacrylamide, polymethacrylamide, polyaminostyrene, amino group-containing polysiloxane and other polymers, and polymers prepared by modifying various polymers with a compound having an amino group.

These polymers are not particularly limited for their average molecular weight, molecular weight distribution, viscosity, and other physical properties, and the physical properties may be adequately selected depending on the application and the physical properties required for the composition of the present invention.

The polymer compound having the amino group is preferably a polymer produced by polymerizing (through polyaddition or polycondensation) a condensable or polymerizable compound (monomer) having the amino group. More preferably, the polymer compound having the amino group is a polysiloxane having the amino group which is a homo-condensation product of a silyl compound having a hydrolyzable substituent and the amino group or a co-condensation product of such silyl compound with a silyl compound having no amino group in view of availability, ease of production, ease of adjusting the molecular weight, ease of adjusting the introduction rate of the amino group, and the like.

The silyl compound having the hydrolyzable substituent and the amino group is not particularly limited, and exemplary compounds are aminosilane compounds including aminosilane compounds having an aliphatic primary amino group such as γ-aminopropyltrimethoxysilane, γ-aminopropyltriethoxysilane, γ-aminopropylmethyldimethoxysilane, γ-aminopropylmethyldiethoxysilane, and 4-amino-3,3-dimethylbutyltrimethoxysilane (these compounds being manufactured by Nippon Unicar Co., Ltd.); aminosilane compounds having an aliphatic secondary amino group such as N,N-bis[(3-trimethoxysilyl)propyl]amine, N,N-bis[(3-triethoxysilyl)propyl]amine, N,N-bis[(3-tripropoxysilyl)propyl]amine (these compounds being manufactured by Nippon Unicar Co., Ltd.), 3-(n-butylamino)propyltrimethoxysilane (Dynasilane 1189 manufactured by Degussa-Hüls), and N-ethyl-aminoisobutyltrimethoxysilane (Silquest A-Link 15 silane manufactured by OSi Specialties); aminosilane compounds having an aliphatic primary and an aliphatic secondary amino group such as N-β(aminoethyl)γ-aminopropylmethyldimethoxysilane, N-β(aminoethyl)γ-aminopropyltrimethoxysilane, and N-β(aminoethyl)γ-aminopropyltriethoxysilane (manufactured by Nippon Unicar Co., Ltd.); aminosilane compounds having an aromatic secondary amino group such as N-phenyl-y-aminopropyltrimethoxysilane (manufactured by Nippon Unicar Co., Ltd.); and aminosilane compounds having a heterocyclic amino group such as imidazoletrimethoxysilane (manufactured by Japan Energy Corporation), triazolesilane produced by reacting aminotriazole with an epoxysilane compound, an isocyanate silane compound, or the like in the presence or absence of a catalyst at a temperature equal to or higher than the room temperature.

Among these, the preferred are aminoalkylsilane compounds such as the aminosilane compound having an aliphatic primary amino group, the aminosilane compound having an aliphatic secondary amino group, and the aminosilane compound having an aliphatic primary and an aliphatic secondary amino group in view of their high effectivity in improving the resistance to compression set and other physical properties.

The silyl compound having no amino group is not particularly limited as long as it is a compound which is different from the silyl compound having a hydrolyzable substituent and the amino group, and which does not contain the amino group, and exemplary such compounds include alkoxysilane compounds and halogenated silane compounds. Among these, the preferred are alkoxysilane compounds in view of their availability, ease of handling, and excellent physical properties of the resulting co-condensation product.

Exemplary alkoxysilane compounds include tetramethoxysilane, tetraethoxysilane, tetrabuthoxysilane, tetraisopropoxysilane, methyltrimethoxysilane, methyltriethoxysilane, methyltributhoxysilane, methyltriisopropoxysilane, phenyltrimethoxysilane, and dimethyldimethoxysilane.

Exemplary halogenated silane compounds include tetrachlorosilane and vinyl trifluorosilane.

Among these, the preferred are tetraethoxysilane and tetramethoxysilane in view of their low price and safety in handling.

The silyl compounds having a hydrolyzable substituent and the amino group and the silyl compounds having no amino group may be used either alone or in combination of two or more.

Such polymer compounds having the amino group may be used either alone or in combination of two or more. When two or more such polymer compounds having the amino group are used in combination, their mixing ratio may be adequately selected depending on the application, the physical properties required, and the like of the composition of the present invention.

The content of the polymer compound having an amino group can be defined by the number (equivalent) of nitrogen atoms in the compound in relation to the side chain of the thermoplastic elastomer of the present invention as in the case of the amino group-containing compound as described above. However, there may exist some amino groups incapable of effectively undergoing interaction with the thermoplastic elastomer depending on the structure, molecular weight, and the like of the polymer compound.

Accordingly, the polymer compounds having the amino group is preferably used at a content of 1 to 200 parts by weight, more preferably 5 parts by weight or more, and most preferably 10 parts by weight or more per 100 parts by weight of the thermoplastic elastomer of the present invention.

The metal salt is not particularly limited as long as it is a compound containing at least one metal element, and the metal salt is preferably a compound containing at least one metal element selected from the group consisting of Li, Na, K, Ti, V, Cr, Mn, Fe, Co, Ni, Cu, Zn, Ga, and A1.

Exemplary metal salts containing at least one of the metal elements include a salt of a C₁-C₂₀ saturated fatty acid such as formate, acetate, or stearate; a salt of an unsaturated fatty acid such as (meth)acrylate; a metal alkoxide (a reaction product with an alcohol containing 1 to 12 carbon atoms); nitrate, carbonate, hydrogencarbonate, chloride, oxide, hydroxide, and a complex with a diketone.

The "complex with a diketone" as used herein designates a complex formed by coordination of a metal atom with, for example, a 1,3-diketone (e.g., acetyl acetone).

Among these, the metal element is preferably Ti, Al, or Zn, and the metal salt is preferably a salt of a C₁-C₂₀ saturated fatty acid such as acetate or stearate, a metal alkoxide (a reaction product with an alcohol containing 1 to 12 carbon atoms), or oxide, hydroxide, or a complex with a diketone of such metal, and more preferably a salt of a C₁-C₂₀ saturated fatty acid such as stearate, a metal alkoxide (a reaction product with an alcohol containing 1 to 12 carbon atoms), or a complex with a diketone of such metal.

The metal salts may be used either alone or in combination of two or more. When two or more metal salts are used in combination, their mixing ratio may be adequately selected depending on the application, the physical properties required, and the like of the composition of the present invention.

Such metal salt is preferably used at a content of 0.05 to 3.0 equivalents, more preferably 0.1 to 2.0 equivalents, and most preferably 0.2 to 1.0 equivalents in relation to the carbonyl group in the thermoplastic elastomer of the present invention. When the content of the metal salt is within such range, the resulting composition of the present invention will exhibit improved physical properties such as resistance to compression set, hardness, mechanical strength, and in particular, tensile strength.

The metal salt used may be in any possible form of metal including hydroxide, metal alkoxide, and carboxylate. For example, when the salt is a hydroxide and the metal is iron, Fe(OH)₂ and Fe(OH)₃ may be used either alone or as a mixture.

As described above, the metal salt is preferably a compound containing at least one metal element selected from the group consisting of Li, Na, K, Ti, V, Cr, Mn, Fe, Co, Ni, Cu, Zn, Ga, and Al. However, the compound may also contain a metal element other than such metal elements as long as the effect of the present invention is not impaired. Although the content of the metal element other than the above-mentioned metal elements is not particularly limited, such metal element is preferably incorporated at 1 to 50% by mole in relation to all metal elements in the metal salt.

The maleic anhydride-modified polymer is a polymer produced by modifying the elastomeric polymer as described above with maleic anhydride. Although the side chain of the maleic anhydride-modified polymer may contain a functional group other than the maleic anhydride residue and the nitrogen-containing heterocycle, the side chain preferably contains only the maleic anhydride residue.

The maleic anhydride residue is introduced (for modification) in the side chain or at the terminal of the elastomeric polymer, and not to the backbone of the elastomeric polymer. In addition, the maleic anhydride residue is a cyclic acid anhydride group, and this cyclic acid anhydride group (moiety) will not undergo ring opening.

Accordingly, an exemplary maleic anhydride-modified thermoplastic polymer is the thermoplastic elastomer having no nitrogen-containing heterocycle but a cyclic acid anhydride group in the side chain as shown in the following formula (6) which is produced by the reaction of the ethylenically unsaturated bond of the maleic anhydride with the elastomeric polymer, and examples are those mentioned above for the elastomeric polymer having a cyclic acid anhydride group in its side chain. 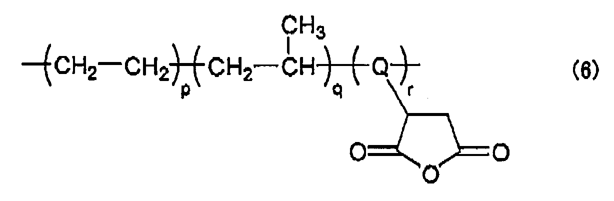 In the formula, Q represents an ethylene residue or a propylene residue, and p, q, and r independently represent a number of 0.1 to 99.

The degree of modification with maleic anhydride is preferably 0.1 to 50% by mole, more preferably 0.3 to 30% by mole, and most preferably 0.5 to 10% by mole per 100% by mole of the backbone moiety of the elastomeric polymer in view of the ability of improving the resistance to compression set without adversely affecting the excellent recyclability.

The maleic anhydride-modified polymers may be used either alone or in combination of two or more. When two or more maleic anhydride-modified polymers are used in combination, their mixing ratio may be adequately selected depending on the application, the physical properties required, and the like of the composition of the present invention.

Such maleic anhydride-modified polymer is preferably used at a content of 1 to 100 parts by weight, and more preferably at 5 to 50 parts by weight per 100 parts by weight of the thermoplastic elastomer of the present invention. When the content of the maleic anhydride-modified polymer is within such range, the resulting composition of the present invention will exhibit improved workability and mechanical strength.

When the elastomeric polymer having the cyclic acid anhydride group on its side chain remains unreacted in the production of the thermoplastic elastomer of the present invention, and more specifically, in the reaction step A or B, the remaining elastomer modified with the carbonyl-containing group may be left unremoved from the composition of the present invention.

Exemplary antiaging agents include hindered phenol compounds and aliphatic and aromatic hindered amine compounds.

Exemplary antioxidants include butylhydroxytoluene (BHT), and butylhydroxyanisole (BHA).

Exemplary pigments include inorganic pigments such as titanium dioxide, zinc oxide, ultramarine, iron red, lithopone, lead, cadmium, iron, cobalt, aluminum, hydrochloride, and sulfate; and organic pigments such as azo pigment and copper phthalocyanine pigment.

Exemplary plasticizers include derivatives of benzoic acid, phthalic acid, trimellitic acid, pyromellitic acid, adipic acid, sebasic acid, fumaric acid, maleic acid, itaconic acid and citric acid, and polyester, polyether, and epoxy plasticizers.

Exemplary thixotropic agents include bentonite, silicic anhydride, silicic acid derivatives, and urea derivatives.

Exemplary UV absorbents include 2-hydroxybenzophenone, benzotriazole, and salicylic acid ester UV absorbents.

Exemplary flame retardants include phosphorus flame retardants such as TCP; halogen flame retardants such as chlorinated paraffin and perchloropentacyclodecane; antimony flame retardants such as antimony oxide; and aluminum hydroxide.

Exemplary solvents include hydrocarbons such as hexane and toluene; halogenated hydrocarbons such as tetrachloromethane; ketones such as acetone and methyl ethyl ketone; ethers such as diethylether and tetrahydrofuran; and esters such as ethyl acetate.

Exemplary surfactants (leveling agent) include polybutyl acrylate, polydimethylsiloxane, modified silicone compound, and fluorosurfactants.

Exemplary dehydrating agents include vinylsilane.

Exemplary anticorrosives include various rust preventive pigments such as zinc phosphate, tannic acid derivative, phosphoric acid ester, and basic sulfonate.

Exemplary adhesion promoters include known silane coupling agents, silane compounds containing an alkoxysilyl group, titanium coupling agents, and zirconium coupling agents, and more specifically, trimethoxyvinylsilane, vinyltriethoxysilane, vinyl tris(2-methoxyethoxy)silane, γ-methacryloxypropyltrimethoxysilane, and 3-glycidoxypropyltrimethoxysilane.

Exemplary antistatic agents generally include quaternary ammonium salts, and hydrophilic compounds such as polyglycols and ethylene oxide derivatives.

The plasticizer is preferably incorporated at a content of 0.1 to 50 parts by weight, and more preferably 1 to 30 parts by weight per 100 parts by weight of the thermoplastic elastomer of the present invention. Other additives are incorporated at a content of 0.1 to 10 parts by weight, and more preferably 1 to 5 parts by weight per 100 parts by weight of the thermoplastic elastomer of the present invention.

Some of the thermoplastic elastomers of the present invention are self-crosslinkable. The thermoplastic elastomers of the present invention, however, may optionally contain a vulcanizing agent, a vulcanization aid, a vulcanization accelerator, a vulcanization retarder, and the like as long as the object of the present invention is not impaired.

Exemplary vulcanizing agents include sulfur vulcanizing agents, organic peroxide vulcanizing agents, metal oxide vulcanizing agents, phenol resin vulcanizing agents, and quinone dioxime vulcanizing agents.

Exemplary sulfur vulcanizing agents include powdered sulfur, precipitated sulfur, highly dispersible sulfur, surface treated sulfur, insoluble sulfur, dimorpholine disulfide, and alkylphenol disulfides.

Exemplary organic peroxide vulcanizing agents include benzoyl peroxide, t-butyl hydroperoxide, 2,4-dichlorobenzoyl peroxide, 2,5-dimethyl-2,5-di(t-butylperoxy)hexane, and 2,5-dimethylhexane-2,5-di(peroxyl benzoate).

Other vulcanizing agents include magnesium oxide, litharge (lead oxide), p-quinone dioxime, tetrachloro-p-benzoquinone, p-dibenzoylquinone dioxime, poly-p-dinitrosobenzene, and methylenedianiline.

Exemplary vulcanization aids include zinc oxide, magnesium oxide, amines; fatty acids such as acetyl acid, propionic acid, butanoic acid, stearic acid, acrylic acid, and maleic acid; and salts of fatty acids such as zinc acetylate, zinc propionate, zinc butanoate, zinc stearate, zinc acrylate, and zinc maleate.

Exemplary vulcanization accelerators include thiuram vulcanization accelerators such as tetramethylthiuram disulfide (TMTD) and tetraethylthiuram disulfide (TETD); aldehyde ammonia vulcanization accelerators such as hexamethylenetetramine; guanidine vulcanization accelerators such as diphenylguanidine; thiazole vulcanization accelerators such as 2-mercaptobenzothiazole and dibenzothiazyl disulfide (DM); and sulfenamide vulcanization accelerators such as N-cyclohexyl-2-benzothiazyl sulfenamide and N-t-butyl-2-benzothiazyl sulfenamide. An alkylphenol resin or its halide may also be employed.

Exemplary vulcanization retarders include organic acids such as phthalic anhydride, benzoic acid, salicylic acid, and acetylsalicylic acid; nitroso compounds such as N-nitroso-diphenylamine, N-nitroso-phenyl-β-naphthylamine, and polymer of N-nitroso-trimethyl-dihydroquinoline; halides such as trichloromelanine; 2-mercaptobenzimidazole; and N-(cyclohexylthio)phthalimide (Santogard PVI).

Such vulcanizing agent is preferably incorporated at a content of 0.1 to 20 parts by weight, and more preferably 1 to 10 parts by weight in relation to 100 parts by weight of the thermoplastic elastomer of the present invention.

The production method of the composition of the present invention is not particularly limited, and the composition may be produced, for example, by mixing the thermoplastic elastomer of the present invention with the optional additives by a roll mill, kneader, pressurized kneader, Banbury mixer, single screw extruder, twin screw extruder, or universal blender.

The vulcanization conditions used when the composition of the present invention is permanently crosslinked (by using a vulcanizing agent) are not particularly limited, and an adequate set of conditions may be selected depending on the components incorporated in the composition, and the like. An exemplary vulcanization condition is the vulcanization carried out at a temperature of 130 to 200°C for 5 to 60 minutes.

When the thermoplastic elastomer (composition) of the present invention is heated to a temperature of about 80 to 200°C, the three-dimensional crosslinking (crosslinking structure) will become dissociated and the thermoplastic elastomer will gain some softness and fluidity presumably because of weakening of the intermolecular or intramolecular interactions between the side chains.

When the thermoplastic elastomer (composition) of the present invention that has become softer and more fluid is left to stand at a temperature of about 80°C or lower, the once dissociated three-dimensional crosslinking (crosslinking structure) will regain its crosslinking to become vulcanized. The recyclability of the thermoplastic elastomer (composition) of the present invention is realized by the repetition of such steps.

The thermoplastic elastomer (composition) of the present invention can be used in a variety of applications where rubbers have been used by taking advantage of, for example, their rubber elasticity. Use as a hot melt adhesive or as an additive incorporated in such a hot melt adhesive is also preferable since the thermoplastic elastomer is capable of improving the heat resistance and recyclability. The thermoplastic elastomer (composition) of the present invention is well adapted for use in automobile applications, hoses, belts, sheets, vibration isolating rubbers, rollers, linings, rubber-lined fabrics, sealants, gloves, fenders, medical rubbers (syringe gaskets, tubes, and catheters), gaskets (for use in home appliances and construction materials), asphalt modifiers, hot melt adhesives, boots, grip members, toys, shoes, sandals, key pads, gears, cap linings of PET bottles, and the like.

The automobile applications include use of the thermoplastic elastomer for tread, carcass, side wall, inner liner, undertread, belt, and other parts of tire; radiator grille, side molding, garnish (pillar, rear, and top of cowl), aero parts (air dam and spoiler), wheel cover, weather strip, cowbelt grille, air outlet louver, air scoop, hood bulge, parts of ventilation opening, barrier parts (overfender, side seal panel, molding (window, hood, and door belt), and marks in the exterior; weather strip of doors, lights, and wipers, glass run, glass run channel, and other parts of interior window frame; air duct hose, radiator hose, and brake hose; crank shaft seal, valve stem seal, head cover gasket, A/T oil cooler hose, mission oil seal, P/S hose, P/S oil seal, and other parts of lubrication oil system; fuel hose, emission control hose, inlet filler hose, diaphragm and other parts of fuel system; engine mount, intank pump mount, and other vibration isolating parts; CVJ boots, rack and pinion boots, and other boots; A/C hose, A/C seal, and other parts of air conditioner; timing belt, auxiliary belt, and other belt members; and windshield sealer, vinyl plastisol sealer, anaerobic sealer, body sealer, spot weld sealer, and other sealers.

The thermoplastic elastomer composition of the present invention may also be incorporated as a rubber modifier such as an anti-flow agent in a resin or rubber which would undergo cold flow at room temperature to thereby prevent flow upon extrusion and cold flow.

The thermoplastic elastomer (composition) of the present invention exhibits superior oil resistance as well as superior mechanical strength while retaining equivalent recyclability compared to conventional thermoplastic elastomers, and therefore, of those applications as mentioned above, this thermoplastic elastomer (composition) is particularly adapted for use in applications that particularly require the recyclability, oil resistance, and mechanical strength.

### EXAMPLES

Next, the first and second aspects of the present invention are described in further detail by referring to Examples which by no means limit the scope of the present invention.

### (Examples 1-1 to 1-4 and Comparative Examples 1-1 to 1-3)

First, to a pressurized kneader set to 180°C, were added an epoxidized natural rubber (ENR-50 manufactured by Malaysian Rubber Board (MRB); degree of epoxidation, 50%) and an antiaging agent (Irganox 1010 manufactured by Ciba Specialty Chemicals) in amounts shown in parts by weight in Table 1. The mixture was then kneaded for 5 minutes.

Next, 3-amino-1,2,4-triazole (ATA manufactured by Nippon Carbide Industries Co., Inc.), 2-aminothiazole (manufactured by Wako Pure Chemical Industries, Ltd.), 2-butyl-4-hydroxymethylimidazole (manufactured by The Nippon Synthetic Chemical Industry Co., Ltd.), 4-aminopyridine (Koei Chemical Co., Ltd.), diethylenetriamine (manufactured by Tokyo Chemical Industry Co., Ltd.), 3-mercaptotriazole (manufactured by Otsuka Chemical Co., Ltd) or 2-mercaptoimidazole (manufactured by Otsuka Chemical Co., Ltd.) was added in amounts shown in parts by weight in Table 1. The mixture was allowed to react by kneading for another 10 minutes to thereby prepare a thermoplastic elastomer composition containing a thermoplastic elastomer. IR spectroscopy was performed to confirm that the composition contained a thermoplastic elastomer having epoxide, hydroxy group, and a nitrogen-containing heterocycle.

The thermoplastic elastomer compositions obtained in Examples 1-1 to 1-4 and Comparative Examples 1-1 to 1-3 were evaluated for their JIS-A hardness, tensile properties, compression set, oil resistance, and recyclability by the procedures as described below. The results are shown in Table 1.

### [JIS-A hardness]

The thermoplastic elastomer composition obtained was hot-pressed at 180°C for 10 minutes and a sheet sample with a thickness of 2 mm was produced.

Disks (diameter, 29 mm) were blanked from this sheet, and the 7 disks were stacked on top of one another and hot-pressed at 200°C for 20 minutes to produce a test disk. This test disk was measured for the JIS-A hardness by the procedure according to JIS K6253.

### [Tensile properties]

The thermoplastic elastomer composition obtained was hot-pressed at 180°C for 10 minutes to produce a sheet with a thickness of 2 mm.

No. 3 dumbbell test pieces were blanked from this sheet, and tensile test was conducted according to JIS K6251 at a tensile speed of 500 mm/min to thereby measure 100% modulus (M₁₀₀) [MPa] , 300% modulus (M₃₀₀) [MPa], breaking strength (T_{B}) [MPa], and elongation at break (E_{B}) [%] at room temperature.

### [Compression set (C-Set)]

The thermoplastic elastomer composition obtained was hot-pressed at 180°C for 10 minutes to produce a sheet with a thickness of 2 mm.

7 sheets were stacked on top of one another and hot-pressed at 200°C for 20 minutes to produce a cylindrical sample with a size of 29 mm (diameter) x 12.5 mm (thickness).

The cylindrical sample was compressed by 25% with a dedicated jig, and kept at this state at 70°C for 22 hours. The compression set was then measured according to JIS K6262.

### [Oil resistance]

The thermoplastic elastomer composition obtained was hot-pressed at 180°C for 10 minutes to produce a sheet with a thickness of 2 mm.

Test disks (diameter, 29 mm) were blanked from this sheet, and the test disks were immersed in JIS No. 3 oil at 23°C for 168 hours. The oil resistance was measured in terms of change (%) in the volume before and after the immersion.

### [Recyclability]

The thermoplastic elastomer composition obtained was hot-pressed at 200°C for 10 minutes to produce a sheet with a thickness of 2 mm. The sheet was then cut in pieces and pressed again. The composition was evaluated for the recyclability by the number of pressing operations that enabled an integral seamless sheet to be produced.

The composition that enabled a sheet to be produced 10 or more times was rated "A".

**Table 1**

| | Example | | | | Comparative Example | | |
|---|---|---|---|---|---|---|---|
| | 1-1 | 1-2 | 1-3 | 1-4 | 1-1 | 1-2 | 1-3 |
| Epoxidized natural rubber | 100.00 | 100.00 | 100.00 | 100.00 | 100.00 | 100.00 | 100.00 |
| Antiaging agent | 1.00 | 1.00 | 1.00 | 1.00 | 1.00 | 1.00 | 1.00 |
| 3-amina-1,2,4-triazole | 11.06 | | | | | | |
| 2-aminothiazole | | 13.18 | | | | | |
| 2-butyl-4-hydroxymethylimidazole | | | 20.28 | | | | |
| 4-aminopyridine | | | | 12.38 | | | |
| Diethylenetriamine | | | | | 6.79 | | |
| 3-mercaptotriazole | | | | | | 13.30 | |
| 2-mercaptoimidazole | | | | | | | 13.17 |
| JIS A hardness | 48 | 45 | 46 | 46 | 28 | 26 | 26 |
| Tensile properties | | | | | | | |
| M₁₀₀ (MPa) | 0.62 | 0.58 | 0.59 | 0.60 | 0.26 | 0.18 | 0.21 |
| M₃₀₀ (MPa) | 1.36 | 1.28 | 1.32 | 1.30 | 0.30 | 0.17 | 0.21 |
| T_{B} (MPa) | 1.60 | 1.58 | 1.58 | 1.59 | 0.38 | 0.17 | 0.20 |
| E_{B} (%) | 332 | 342 | 350 | 336 | 625 | 420 | 1000 |
| Compression set (%) : | 41 | 50 | 46 | 49 | 93 | 100 | 100 |
| Oil resistance (23°C x 168 h) (%) | 8 | 12 | 15 | 13 | 200 | 285 | 320 |
| Recyclability | A | A | A | A | A | A | A |

As demonstrated in the results shown in Table 1, the thermoplastic elastomer compositions produced in Examples 1-1 to 1-4 exhibited high oil resistance as well as excellent mechanical strength, and in particular, excellent resistance to compression set compared to those of the thermoplastic elastomer composition produced in Comparative Example 1-1 which contained the thermoplastic elastomer having no nitrogen-containing heterocycle.

Unexpectedly, the thermoplastic elastomer compositions produced in Examples 1-1 to 1-4 exhibited high oil resistance as well as excellent mechanical strength, and in particular, excellent compression set by far compared to the thermoplastic elastomer compositions produced in Comparative Examples 1-1 to 1-2 which contained each the thermoplastic elastomer wherein the nitrogen-containing heterocycle was bonded to the backbone through sulfur atom.

### (Examples 1-5 to 1-6)

First, to a pressurized kneader set to 180°C, were added an acrylic rubber having epoxide (AR54 manufactured by ZEON Corporation) and an antiaging agent (Irganox 1010 manufactured by Ciba Specialty Chemicals) in amounts shown in parts by weight in Table 2. The mixture was then kneaded for 5 minutes.

Next, 3-amino-1,2,4-triazole (ATA manufactured by Nippon Carbide Industries Co., Inc.) was added in an amount shown in parts by weight in Table 2. The mixture was allowed to react by kneading for another 10 minutes to thereby prepare a thermoplastic elastomer composition containing a thermoplastic elastomer. IR spectroscopy was performed to confirm that the composition contained a thermoplastic elastomer having epoxide, hydroxy group, and a nitrogen-containing heterocycle.

The thermoplastic elastomer compositions produced in Examples 1-5 and 1-6 were evaluated for their JIS-A hardness, tensile properties, compression set, oil resistance, and recyclability. The results are shown in Table 2.

For the tensile properties, 50% modulus (M₅₀) [MPa] and 200% modulus (M₂₀₀) [MPa] were measured instead of the 300% modulus (M₃₀₀) [MPa] .

The oil resistance was evaluated by measuring the change (%) in the volume when the sample was immersed in JIS No. 3 oil at 70°C for 72 hours.

**Table 2**

| | Example | |
|---|---|---|
| | 1-5 | 1-6 |
| Epoxide-containing acrylic rubber | 100.00 | 100.00 |
| Antiaging agent | 0.30 | 0.30 |
| 3-amino-1,2,4-triazole | 2.50 | 5.00 |
| JIS A hardness | 23 | 21 |
| Tensile properties | | |
| M₅₀ (MPa) | 0.20 | 0.15 |
| M₁₀₀ (MPa) | 0.37 | 0.24 |
| M₂₀₀ (MPa) | 1.00 | 0.60 |
| T_{B} (MPa) | 1.15 | 0.98 |
| E_{B} (%) | 221 | 273 |
| Compression set (%) | 13 | 15 |
| Oil resistance (23°C x 168 h) (%) | 2.8 | 6.9 |
| Oil resistance (70°C x 72 h)(%) | 15.4 | 6.9 |
| Recyclability | A | A |

As demonstrated by the results shown in Table 2, the thermoplastic elastomer compositions prepared in Examples 1-5 and 1-6 also exhibited excellent oil resistance as well as excellent mechanical strength, and in particular, excellent resistance to compression set.

Next, the third and fourth aspects of the present invention are described in detail by referring to Examples which by no means limit the scope of the present invention.

### (Example 2-1 and Comparative Example 2-1)

First, to a pressurized kneader set to 180°C, were added an epoxidized natural rubber (ENR-50 manufactured by Malaysian Rubber Board (MRB); degree of epoxydation, 50%) and an antiaging agent (Irganox 1010 manufactured by Ciba Specialty Chemicals) in amounts shown in parts by weight in Table 3. The mixture was then kneaded for 5 minutes.

Next, polyethyleneimine (EPOMIN SP-200 manufactured by Nippon Shokubai Co., Ltd.; weight average molecular weight, 10,000) or diethylenetriamine (manufactured by Tokyo Chemical Industry Co., Ltd.) was added in an amount shown in parts by weight in Table 3. The mixture was allowed to react by kneading for another 10 minutes to thereby prepare a thermoplastic elastomer composition containing a thermoplastic elastomer. IR spectroscopy was performed to confirm that the composition contained a thermoplastic elastomer having epoxide, hydroxy group, and a primary amino group and/or a secondary amino group.

The thermoplastic elastomer compositions produced in Example 2-1 and Comparative Example 2-1 were evaluated for the JIS-A hardness, tensile properties, compression set, oil resistance, and recyclability by the procedures as described above. The results are shown in Table 3.

The composition produced in Example 2-1 could not be measured for its M₃₀₀ since the sample was torn at an elongation of not more than 300%. In Table 3, the result is shown with "-" for this sample.

**Table 3**

| | Example 2-1 | Comparative Example 2-1 |
|---|---|---|
| Epoxidized natural rubber | 100.00 | 100.00 |
| Antiaging agent | 1.00 | 1.00 |
| Polyethyleneimine | 20.92 | |
| Diethylenetriamine | | 6.79 |
| JIS A hardness | 34 | 28 |
| Tensile strength | | |
| M₁₀₀ (MPa) | 1.11 | 0.26 |
| M₃₀₀ (MPa) | - | 0.30 |
| T_{B} (MPa) | 1.50 | 0.38 |
| E_{B} (%) | 264 | 625 |
| Compression set (%) | 50 | 93 |
| Oil resistance (%) | 8.5 | 200 |
| Recyclability | A | A |

As evident from the results shown in Table 3, the thermoplastic elastomer composition produced in Example 2-1 exhibited high oil resistance as well as excellent mechanical strength, and in particular, excellent resistance to compression set by far compared to the thermoplastic elastomer composition produced in Comparative Example 2-1.

### (Examples 2-2 to 2-3 and Comparative Examples 2-2 to 2-3)

First, to a pressurized kneader set to 200°C, were added an acrylic rubber having epoxide (an epoxide-containing acrylic rubber), a polyamide elastomer (UBESTA XPA manufactured by Ube Industries, Ltd.), and an antiaging agent (Irganox 1010 manufactured by Ciba Specialty Chemicals) in amounts shown in parts by weight in Table 4. The mixture was then kneaded for 5 minutes.

Next, polyethyleneimine (EPOMIN SP-200 manufactured by Nippon Shokubai Co., Ltd.; weight average molecular weight, 10,000) or diethylenetriamine (manufactured by Tokyo Chemical Industry Co., Ltd.) was added in an amount shown in parts by weight in Table 4. The mixture was allowed to react by kneading for another 10 minutes to thereby prepare a thermoplastic elastomer composition containing a thermoplastic elastomer. IR spectroscopy was performed to confirm that the composition contained a thermoplastic elastomer having epoxide, hydroxy group, and a primary amino group and/or a secondary amino group.

In Table 4, Nipol AR32 (manufactured by ZEON Corporation; glass transition point, -26°C) was used for the epoxide-containing acrylic rubber 1, and Nipol AR53L (manufactured by ZEON Corporation: glass transition point, -32°C) was used for the epoxide-containing acrylic rubber 2.

The thermoplastic elastomer compositions produced in Examples 2-2 to 2-3 and Comparative Examples 2-2 to 2-3 were evaluated for their JIS-A hardness, tensile properties, compression set, oil resistance, and recyclability by the procedures as described above. The results are shown in Table 4.

**Table 4**

| | Example | | Comparative Example | |
|---|---|---|---|---|
| | 2-2 | 2-3 | 2-2 | 2-3 |
| Epoxide-containing acrylic rubber 1 | 100.00 | | 100.00 | |
| Epoxide-containing acrylic rubber 2 | | 100.00 | | 100.00 |
| Polyamide elastomer | 50.00 | 50.00 | 50.00 | 50.00 |
| Antiaging agent | 1.00 | 1.00 | 1.00 | 1.00 |
| Polyethyleneimine | 1.51 | 1.51 | | |
| Diethylenetriamine | | | 0.49 | 0.49 |
| JIS A hardness | 78 | 82 | 76 | 76 |
| Tensile properties | | | | |
| M₅₀ (MPa) | 3.42 | 4.03 | 2.87 | 3.34 |
| M₁₀₀ (MPa) | 4.83 | 5.90 | 3.95 | 4.93 |
| T_{B} (MPa) | 7.80 | 8.88 | 6.08 | 7.62 |
| E_{B} (%) | 227 | 180 | 240 | 224 |
| Compression set (%) | 42 | 32 | 73 | 69 |
| Oil resistance (%) | 18 | 15 | 32 | 36 |
| Recyclability | A | A | A | A |

As demonstrated in the results shown in Table 4, the thermoplastic elastomer compositions produced in Examples 2-2 and 2-3 exhibited excellent oil resistance as well as satisfactory mechanical strength, and in particular, resistance to compression set by far compared to those of the thermoplastic elastomer compositions produced in Comparative Examples 2-2 and 2-3.

## Claims

1. A thermoplastic elastomer comprising an elastomeric polymer having epoxide, hydroxy group, and a nitrogen-containing heterocycle,
wherein the nitrogen-containing heterocycle is bonded to backbone of the elastomeric polymer through nitrogen atom or oxygen atom.

2. The thermoplastic elastomer according to claim 1 which has a structure represented by the following formula (1): 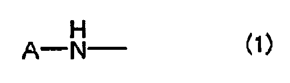 wherein A represents a nitrogen-containing heterocycle.

3. The thermoplastic elastomer according to claim 1 or 2 which has a structure represented by any one of the following formulae (2a) to (2c): 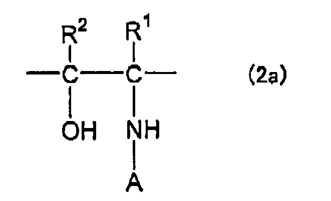 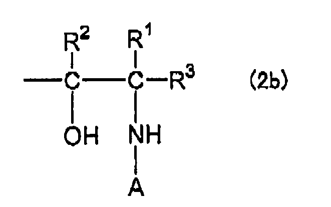 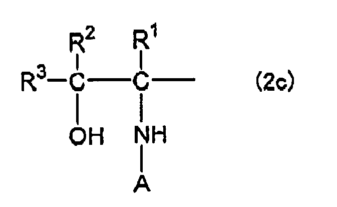 wherein A represents a nitrogen-containing heterocycle, and R¹ to R³ independently represent hydrogen atom, an alkyl group, an aryl group, or an aralkyl group wherein an alkyl group is substituted with an aryl group.

4. The thermoplastic elastomer according to any one of claims 1 to 3 produced by reacting a compound (A) having epoxide and a compound (B) having amino group or hydroxy group and a nitrogen-containing heterocycle.

5. The thermoplastic elastomer according to claim 4 wherein the compound (A) is an epoxidized elastomer.

6. The thermoplastic elastomer according to claim 5 wherein the epoxidized elastomer is epoxidized natural rubber, styrene elastomer having epoxide, acrylic rubber having epoxide, ethylene - glycidyl methacrylate - methyl acrylate copolymer, or ethylene - glycidyl methacrylate-vinyl acetate copolymer.

7. The thermoplastic elastomer according to any one of claims 4 to 6 wherein the compound (B) is 3-amino-1,2,4-triazole, 2-aminothiazole, 4-aminopyridine, or 2-butyl-4-hydroxymethylimidazole.

8. A thermoplastic elastomer composition comprising the thermoplastic elastomer of any one of claims 1 to 7.

9. A thermoplastic elastomer comprising an elastomeric polymer having epoxide and hydroxy group, which is produced by reacting a compound (C) having epoxide and a polyamine compound (D) having at least two primary amino groups and branching carbon and/or branching nitrogen.

10. The thermoplastic elastomer according to claim 9 wherein the compound (C) is an epoxidized elastomer.

11. The thermoplastic elastomer according to claim 10 wherein the epoxidized elastomer is epoxidized natural rubber, styrene elastomer having epoxide, acrylic rubber having epoxide, ethylene - glycidyl methacrylate - methyl acrylate copolymer, or ethylene - glycidyl methacrylate - vinyl acetate copolymer.

12. The thermoplastic elastomer according to any one of claims 9 to 11 wherein the polyamine compound (D) has a tertiary amino group.

13. The thermoplastic elastomer according to any one of claims 9 to 12 wherein the polyamine compound (D) has a secondary amino group.

14. The thermoplastic elastomer according to claim 13 wherein the polyamine compound (D) is a polyalkyleneimine.

15. The thermoplastic elastomer according to any one of claims 9 to 14 which has a structure represented by any one of the following formulae (3a) to (3c): 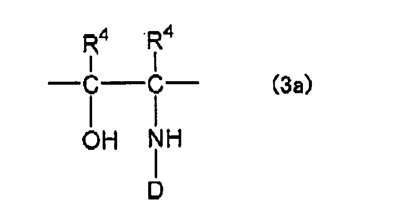 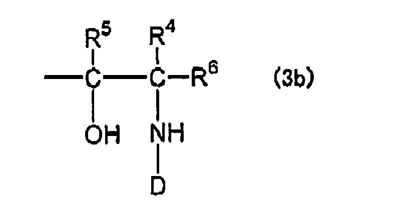 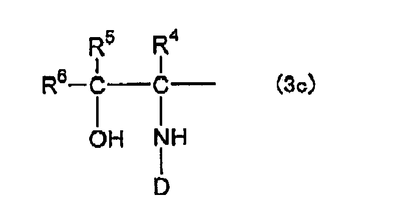 wherein D represents a hydrocarbon group having at least one primary amino group and branching carbon and/or branching nitrogen, R⁴ to R⁶ independently represent hydrogen atom, an alkyl group, an aryl group, or an aralkyl group wherein an alkyl group is substituted with an aryl group.

16. A thermoplastic elastomer composition comprising the thermoplastic elastomer of any one of claims 9 to 15.

17. The thermoplastic elastomer composition according to claim 16 further comprising a polyamide compound.
